# EUROPÄISCHE PATENTSCHRIFT

(11) **EP 2 486 787 B1**
(45) Veröffentlichungstag und Bekanntmachung des Hinweises auf die Patenterteilung: **24.04.2013**
(21) Anmeldenummer: 11001169.9
(22) Anmeldetag: 14.02.2011
(51) Int. Cl.: A01G 17/02

(54) **Vorrichtung zum Entfernen von Pflanzenteilen von einer Wuchshilfe**
Device and method for removing plant parts from a climbing support
Dispositif destiné à supprimer des éléments de plantes d'une aide à la croissance

(43) Veröffentlichungstag der Anmeldung: 15.08.2012
(73) Patentinhaber: ERO-Gerätebau GmbH, 55469 Niederkumbd (DE)
(72) Erfinder: Petry, Willy, 56290 Uhler (DE)
(74) Vertreter: Lemcke, Brommer & Partner

(56) Entgegenhaltungen:
- WO-A2-97/36473
- WO-A2-2009/051498

## Beschreibung

Die Erfindung betrifft eine Vorrichtung zum Entfernen von Pflanzenteilen von mindestens einer länglichen, zugstabilen, biegeschlaffen Wuchshilfe während einer Bewegung der Vorrichtung entlang der Wuchshilfe gemäß Oberbegriff des Anspruchs 1.

Bei dem Anbau von Pflanzen sind längliche, zugstabile, biegeschlaffe Wuchshilfen, wie beispielsweise Seile oder Drähte bekannt, um die Pflanzen zu stützen und/oder den Wuchs der Pflanzen zu beeinflussen. So ist beispielsweise im Weinbau die Verwendung von Spalierdrähten bekannt, beispielsweise bei der Guyot- und auch bei der Kordonerziehung.

Bei dem Anbau von Pflanzen mittels vorgenannter Wuchshilfen ist es typischerweise zu bestimmten Zeitpunkten wünschenswert, Pflanzenteile abzutrennen und die an den Wuchshilfen noch anhaftenden, abgetrennten Pflanzenteile zu entfernen. So ist es beispielsweise im Weinbau üblich, Rebentriebe abzutrennen, beispielsweise mittels eines motorisch angetriebenen Vorschneiders. Eine Vielzahl von abgetrennten Rebentrieben bleibt jedoch nach dem Abtrennen von der Rebenpflanze an der Wuchshilfe haften, aufgrund von Verrankung oder zumindest teilweisem Umschließen der Wuchshilfe durch den Rebentrieb oder einzelne Fortsätze des Rebentriebs.

Das Entfernen der an der Wuchshilfe anhaftenden Pflanzenteile erfolgt üblicherweise manuell und stellt einen aufwändigen, mühsamen Arbeitsvorgang dar.

Zur Vereinfachung dieses Vorgangs ist aus der DE 10 2004 031 088 A1 ein Verfahren bekannt, bei dem mittels zweier sich gegenläufig drehender Walzen abgeschnittene, jedoch noch am Spalierdraht anhaftende Rebentriebe erfasst und nach oben von dem Spalierdraht abgezogen werden. Hierbei ist es jedoch problematisch, sämtliche Rebentriebe mittels der Walzen zu erfassen und darüber hinaus können zumindest bei starker Verrankung der Rebentriebe starke Kräfte auf den Spalierdraht wirken, die zu Beschädigungen führen können.

Aus WO 2009/051498 A2 ist eine Vorrichtung und ein Verfahren zum Entfernen von Pflanzenteilen von einer Wuchshilfe bekannt, wobei die an der Wuchshilfe anhaftenden Pflanzenteile mittels einer Pflanzenzuführungseinheit komprimiert und/oder zu einer Ablöseeinheit zugeführt werden. Die Ablöseeinheit umfasst mindestens ein Ablöseelement wie beispielsweise ein rotierendes Schneidmesser, mittels dessen die Pflanzenteile zumindest teilweise von der Wuchshilfe abgelöst werden. Weiterhin wird die Wuchshilfe während des Bearbeitungsvorgangs mittels einer Wuchshilfeführung geführt, um insbesondere eine Beschädigung der Wuchshilfeführung durch das Ablöseelement zu vermeiden. Grundsätzlich ist es möglich, mittels dieser Vorrichtung im Weinbau nach dem händischen Schneiden der Reben die abgeschnittenen, noch an den Wuchshilfen anhaftenden Rebentriebe zu entfernen und auf die Verwendung eines motorisch angetriebenen Vorschneiders zu verzichten.

Grundsätzlich problematisch bei dem Entfernen von Pflanzenteilen von der Wuchshilfe ist, dass die Pflanzenteile unregelmäßig gewachsen und insbesondere nach einem Abschneiden von der Hauptpflanze in unterschiedlichsten Richtungen und in unterschiedlichen Längen von der Wuchshilfe abstehen können, so dass hohe Anforderungen an das Verfahren und die Vorrichtung zum Entfernen aller Ausgestaltungen der Pflanzenteile bestehen. Darüber hinaus können die Pflanzenteile durch Umwicklungen und/oder Verästelungen eine stabile Verbindung mit der Wuchshilfe aufweisen, die schwierig zu lösen ist.

Der vorliegenden Erfindung liegt daher die Aufgabe zugrunde, die vorbekannten Vorrichtungen und Verfahren zum Entfernen von Pflanzenteilen von einer Wuchshilfe zu verbessern und die Fehleranfälligkeit und daraus resultierende notwendige Unterbrechungen während des Betriebs zu verringern.

Gelöst ist diese Aufgabe durch eine Vorrichtung gemäß Anspruch 1. Vorteilhafte Ausgestaltungen der Vorrichtung finden sich in den Ansprüchen 2 bis 15. Hiermit wird der Wortlaut aller Ansprüche durch ausdrückliche Bezugnahme in die Beschreibung aufgenommen.

Die erfindungsgemäße Vorrichtung zum Entfernen von Pflanzenteilen von mindestens einer länglichen, zugstabilen, biegeschlaffen Wuchshilfe während einer Bewegung der Vorrichtung entlang der Wuchshilfe umfasst eine Wuchshilfeführung, zum Führen der Wuchshilfe während der Bewegung der Vorrichtung entlang der Wuchshilfe. Weiterhin umfasst die Vorrichtung eine Ablöseeinheit. Die Vorrichtung umfasst weiterhin eine Pflanzenführungseinheit zum Komprimieren und/oder Zuführen der an der Wuchshilfe anhaftenden Pflanzenteile zu der Ablöseeinheit.

Die Ablöseeinheit umfasst mindestens ein Ablöseelement, welches Ablöseelement derart beweglich an der Vorrichtung angeordnet ist, dass bei Betrieb durch Bewegung des Ablöseelementes Pflanzenteile von der Wuchshilfe zumindest teilweise ablösbar sind.

Die Pflanzenführungseinheit umfasst mindestens ein drehbar angeordnetes Einzugsrad, zum Einzug und/oder zum Komprimieren der Pflanzenteile.

Wesentlich ist, dass die Pflanzenführungseinheit eine Mehrzahl von Einzugselementen umfasst. Jedes der Mehrzahl von Einzugselementen ist beweglich und eine reale oder gedachte Mantelfläche des Einzugsrades durchdringend angeordnet, derart, dass bei einer Drehung des Einzugsrades das Einzugselement in einer Stellung nach vorne hinsichtlich der Bewegungsrichtung der Vorrichtung weiter aus der Mantelfläche herausragt als in einer Stellung nach hinten.

Es liegt im Rahmen der Erfindung, die Mantelfläche des Einzugsrades im Wesentlichen geschlossen mit Ausnehmungen für die Einzugselemente auszugestalten. In diesem Fall kann von einer realen Mantelfläche gesprochen werden. Ebenso liegt es im Rahmen der Erfindung, dass die Mantelfläche des Einzugsrades eine oder mehrere Ausnehmungen aufweist, beispielsweise durch Einzelelemente wie Stäbe entlang des Umfangs des Einzugsrades gebildet ist. In solchen Fällen ist die Mantelfläche die kleinste Umhüllung des Einzugsrades und stellt somit eine gedachte Mantelfläche dar.

Die Erfindung ist in der Erkenntnis des Anmelders begründet, dass insbesondere aufgrund des unregelmäßigen Wuchses in Bewegungsrichtung der Vorrichtung vor der Pflanzenführungseinheit häufig Störungen derart auftreten, dass sich Pflanzenteile vor der Pflanzenführungseinheit aufstauen oder zumindest in ungünstigen Einzugspositionen zum Komprimieren und/oder Zuführen durch die Pflanzenführungseinheit befinden. Hierdurch werden insbesondere folgende Fehler verursacht:
Durch das Aufstauen einer Vielzahl von Pflanzenteilen kann es zu unregelmäßigem Zuführen der Pflanzenteile mittels der Pflanzenführungseinheit zu der Ablöseeinheit kommen, so dass zunächst sich eine Vielzahl von Pflanzenteilen vor der Pflanzenführungseinheit aufstaut und anschließend diese Pflanzenteile in Form eines Knäuels oder großen Ballens der Ablöseeinheit zugeführt werden, so dass häufig aufgrund solch eines Knäuels oder Ballens die Wuchshilfe in einen ungünstigen Verlaufsweg abgelenkt wird, so dass insbesondere ein hohes Risiko besteht, dass die Wuchshilfe durch das Ablöseelement der Ablöseeinheit beschädigt, häufig durchtrennt wird.

Darüber hinaus kann bereits ein Aufstauen von Pflanzenteilen oder bereits eine ungünstige Orientierung von Pflanzenteile vor der Pflanzenführungseinheit dazu führen, dass trotz des Verwendens einer Wuchshilfeführung die Wuchshilfe in einen ungünstigen Verlaufsweg abgelenkt wird, so dass ebenso ein hohes Risiko besteht, dass die Wuchshilfe durch das Ablöseelement der Ablöseeinheit beschädigt, häufig durchtrennt wird.

Untersuchungen des Anmelders haben gezeigt, dass die Verwendung eines Einzugsrades, dessen Mantelfläche von einer Mehrzahl von Einzugselementen durchdrungen ist, die Bildung vorgenannter Staus und damit das Anhäufen vorgenannter Knäuel oder Ballen vermieden werden. Denn mittels der Einzugselemente werden die Pflanzenteile zusätzlich erfasst und hierdurch auch bei ungünstiger Orientierung von dem Einzugsrad eingezogen und komprimiert und/oder der Ablöseeinheit zugeführt.

Die Untersuchungen des Anmelders haben jedoch gezeigt, dass das Anbringen starrer Einzugselemente auf dem Einzugsrad etwa nach Art eines Zahnrades oder in der Art von Spikes auf einem Autoreifen keine zufrieden stellende Funktionalität ergibt: Einerseits ist es notwendig, die Einzugselemente in einer ausreichenden Länge aus der Mantelfläche herausragen zu lassen, um ein effizientes Eingreifen in die Pflanzenteile zu ermöglichen. Andererseits bergen die aus der Mantelfläche herausragenden Einzugselemente ein erhebliches Risiko, dass Pflanzenteile von den Einzugsfingern von der Wuchshilfe gelöst werden und sich um das Einzugsrad herumwickeln und insbesondere, dass die Wuchshilfe in Stellung der Einzugselemente nach hinten hinsichtlich der Bewegungsrichtung der Vorrichtung von den Einzugselementen erfasst und beschädigt und/oder in eine ungünstige Position geschoben und/oder um das Einzugsrad herumgewickelt wird.

Neben dem Vorsehen von Einzugselementen zum zusätzlichen Erfassen der Pflanzenteile ist es somit wesentlich, dass jedes der Mehrzahl von Einzugselementen in einer Stellung nach vorne hinsichtlich der Bewegungsrichtung der Vorrichtung weiter aus der Mantelfläche herausragt als in einer Stellung nach hinten. Hierdurch ist gewährleistet, dass in dem in Bewegungsrichtung vorne liegenden Bereich des Einzugrades, in dem ein Erfassen der Pflanzenteile wesentlich ist, die Einzugselemente weiter aus der Mantelfläche herausragen und somit ein effizientes Erfassen gewährleistet ist und in dem hinten liegenden Bereich des Einzugsrades, in dem die Pflanzenteile bereits komprimiert bzw. für die Zuführung zu der Ablöseeinheit geeignet gemacht sind, ragen die Einzugselemente weniger weit aus der Mantelfläche heraus, so dass eine nachteilige Einwirkung auf die Pflanzenteile und die Wuchshilfe wie zuvor beschrieben ausgeschlossen wird.

Durch die Ausbildung des Einzugsrades und der Einzugselemente bei der erfindungsgemäßen Vorrichtung wird somit in effektiver Weise eine typische Fehlerquelle nahezu vollständig ausgeschlossen, so dass durch diese Fehler begründete Betriebsunterbrechungen und Beschädigungen der Wuchshilfe ebenfalls nahezu ausgeschlossen sind.

Hierdurch wird das Verhältnis zwischen Betriebs- und Wartungsdauer der erfindungsgemäßen Vorrichtung erheblich verbessert und damit die Wirtschaftlichkeit erhöht.

Vorzugsweise sind Einzugsrad und die Mehrzahl von Einzugselementen derart ausgebildet, dass in Stellung nach vorne die Einzugselemente mit einer um mindestens einen Faktor 2 größeren Länge aus der Mantelfläche herausragen als in Stellung nach hinten, bevorzugt um mindestens einen Faktor 3, weiter bevorzugt um mindestens einen Faktor 5.

Eine konstruktiv einfache Ausgestaltung ergibt sich in einer vorteilhaften Ausführungsform, bei der jedes der Mehrzahl von Einzugselementen drehbar mit einer Drehachse senkrecht zu einer Längserstreckung des Einzugselementes angeordnet ist. Insbesondere ist es vorteilhaft, dass alle Einzugselemente um eine gemeinsame Drehachse drehbar angeordnet sind, wobei bevorzugt die Mehrzahl von Einzugselementen in Axialrichtung ihrer gemeinsamen Drehachse versetzt, vorzugsweise nebeneinander angeordnet sind.

Hierdurch ergibt sich ein konstruktiver einfacher Aufbau, bei dem die Einzugselemente durch Führen des Einzugsrades sich mit dem Einzugsrad drehen, d. h. bei einer vollständigen Drehung des Einzugsrades vollführt jedes der Einzugselemente ebenfalls eine vollständige Drehung.

Die vorgenannte Führung der Einzugselemente durch das Einzugsrad ist vorzugsweise dadurch ausgebildet, dass die Mantelfläche des Einzugsrades Ausnehmungen aufweist, durch welche sich die Einzugselemente erstrecken, so dass durch den Rand der Ausnehmung eine Drehbewegung des Rades auf das jeweilige Einzugselement übertragen wird.

Eine konstruktiv einfache und robuste Ausführungsform, bei der insbesondere die zuvor beschriebenen unterschiedlichen Längen des Herausragens der Einzugselemente abhängig von der Stellung der Einzugselemente gewährleistet ist, ergibt sich in einer vorzugsweisen Ausführungsform, bei der die Drehachse jedes der Mehrzahl.von Einzugselementen parallel zu der Drehachse des Einzugsrades ist, wobei vorzugsweise die Drehachse jedes der Mehrzahl von Einzugselementen gegenüber der Drehachse des Einzugsrades beabstandet ist. Aufgrund der parallelen, voneinander beabstandeten Drehachsen von den Einzugselementen einerseits und des Einzugsrades andererseits ergibt sich bei Drehung des Einzugsrades unmittelbar, dass jene Einzugselemente, welche in Richtung der Beabstandung der Drehachsen aus der Mantelfläche herausragen, um eine größere Länge aus der Mantelfläche herausragen als solche Einzugselemente, welche entgegengesetzt der Richtung der Beabstandung zwischen den beiden Drehachsen aus der Mantelfläche herausragen.

Um zu gewährleisten, dass in Bewegungsrichtung der Vorrichtung nach vorne die Einzugselemente weiter herausragen als nach hinten, ist die Drehachse jedes der Mehrzahl von Einzugselementen bevorzugt zumindest in Bewegungsrichtung der Vorrichtung nach vorne von der Drehachse des Einzugsrades beabstandet angeordnet.

Weiterhin ist es vorteilhaft, die Drehachse jedes der Mehrzahl von Einzugselementen zumindest in einer von einem Komprimierungsbereich des Einzugsrades abgewandten Richtung von der Drehachse des Einzugsrades beabstandet anzuordnen, insbesondere beide vorgenannten Beabstandungen zu kombinieren.

Vorteilhafterweise weist die Pflanzenführungseinheit der erfindungsgemäßen Vorrichtung ein Gegenelement zu dem Einzugsrad auf, so dass zwischen Einzugsrad und Gegenelement eine Komprimierung zumindest unregelmäßig von der Wuchshilfe abstehender Pflanzenteile erfolgt. Vorteilhafterweise ist die Pflanzenführungseinheit derart ausgebildet, dass jedes der Mehrzahl von Einzugselementen das Gegenelement unabhängig von der Stellung des Einzugselementes nicht berührt. Um dennoch ein ausreichend breites Herausragen der Einzugselemente in Bewegungsrichtung der Vorrichtung vorne liegenden Bereich des Einzugsrades zu gewährleisten, ist es vorteilhaft, zusätzlich zu der vorgenannten Beabstandung nach vorne auch eine Beabstandung in Gegenrichtung der Position des Komprimierungsbereiches vorzusehen.

Vorzugsweise sind die Einzugselemente in Axialrichtung Ihrer Drehachse in Gruppen angeordnet. Dies bedeutet, dass in axialer Projektion die Einzugselemente einer Gruppe stets die gleiche Stellung aufweisen. Insbesondere ist es vorteilhaft, Zweiergruppen auszubilden, d. h. die Einzugselemente paarweise in Axialrichtung ihrer Drehachse zu gruppieren.

Hierdurch ergibt sich der Vorteil, dass die Pflanzenteile stets durch mindestens zwei Einzugselemente erfasst werden können und ein Entgleiten der Pflanzenelemente beispielsweise durch Drehung vermieden wird.

Insbesondere ist es vorteilhaft, die erfindungsgemäße Vorrichtung derart auszubilden, dass die Wuchshilfe bei Betrieb zwischen den Einzugselementen einer Gruppe verläuft, so dass mindestens ein Einzugselement rechts und ein Einzugselement links der Wuchshilfe den Einzug der Pflanzen gewährleistet.

Untersuchungen des Anmelders haben ergeben, dass es weiterhin vorteilhaft ist, dass die Gruppen in Axialrichtung unterschiedliche Abstände zwischen den Einzugselementen aufweisen, so dass an unterschiedlichen Positionen aufgrund der unterschiedlichen Abstände Pflanzenteile ergriffen werden können.

Insbesondere ist es vorteilhaft, dass in Drehrichtung des Einzugsrades die Gruppen einen zunehmenden Abstand der Einzugselemente in Axialrichtung aufweisen. Dies bedeutet, dass bei Betrachten eines sich drehenden Einzugsrades von vorne sich der Abstand zwischen zwei aufeinander folgenden Einzugselementen verringert, um nach einer vollständigen Drehung wieder auf den maximalen Abstand zu springen. In dieser Ansicht ergibt sich somit ein V-förmiges Zusammenführen der Einzugselemente bei Betrachten eines drehenden Einzugsrades von vorne, welches bereits eine Komprimierungsfunktion auf die Pflanzenteile ausüben kann. Insbesondere ist bei dieser Anordnung, bei welcher zusätzlich die Wuchshilfe zwischen den Einzugselementen einer Gruppe geführt ist vorteilhaft, dass durch das vorbeschriebene sich einander Annähern der Einzugselemente in Axialrichtung die Wuchshilfe mit jeder vollständigen Drehung des Einzugsrades in den mittigen Bereich der Einzugselemente mit dem kleinsten Abstand zentriert wird. Hierdurch kann somit auch ein Herausrutschen oder eine Verschiebung der Wuchshilfe senkrecht zur Längserstreckung der Wuchshilfe korrigiert werden.

Wie zuvor ausgeführt, weist die Pflanzenführungseinheit der erfindungsgemäßen Vorrichtung vorzugsweise ein Gegenelement zu dem Einzugsrad auf, welches angeordnet ist, um zwischen Einzugsrad und Gegenelement einen Komprimierungsbereich für die Pflanzenteile auszubilden.

Es liegt im Rahmen der Erfindung, das Gegenelement in konstruktiv einfacher Weise beispielsweise als Fläche, insbesondere als Blech auszubilden. Insbesondere effizient ist es hingegen in einer vorteilhaften Ausgestaltung, das Gegenelement als Gegeneinzugsrad auszubilden.

Das Gegeneinzugsrad weist vorzugsweise eine zu dem Einzugsrad parallele Drehachse auf und wird vorzugsweise gegensinnig zu dem Einzugsrad angetrieben.

Hierbei ist es vorteilhaft, dass die Einzugselemente im Komprimierungsbereich nahe an das Gegeneinzugsrad heranreichen, dieses jedoch nicht berühren. Insbesondere ist es vorteilhaft, dass die Mehrzahl von Einzugselementen im Komprimierungsbereich einen Abstand im Bereich 1 cm bis 20 cm, bevorzugt im Bereich 1 cm bis 10 cm, weiter bevorzugt im Bereich 1 cm bis 5 cm zu dem Gegenelement aufweisen.

Bei der Ausbildung des Gegenelementes als Gegeneinzugsrad ist es vorteilhaft, das Gegeneinzugsrad tonnenförmig auszubilden, mit einem in Axialrichtung nach außen hin abnehmenden Radius und die Axialrichtung weiter beabstandete Einzugselemente mit einer größeren Länge auszubilden, als die weniger weit beabstandeten Einzugselemente jeweils einer Gruppe. Hierdurch wird der nach außen hin abnehmende Radius des Gegeneinzugsrades durch die größere Länge der außen liegenden Einzugselemente kompensiert, so dass sich in etwa ein konstanter Abstand zwischen Einzugselement und Oberfläche des Gegeneinzugsrades ergibt, unabhängig von dem Abstand zwischen den Einzugselementen.

Um ein Umwickeln des Einzugsrades durch Pflanzenteile zu vermeiden und insbesondere um negative Einwirkungen der Einzugselemente auf die Wuchshilfe zu vermeiden, ist es vorteilhaft, dass die Mehrzahl von Einzugselementen am entgegen der Bewegungsrichtung der Vorrichtung liegenden Ende des Komprimierungsbereiches um weniger als 5 cm, bevorzugt um weniger als 3 cm, weiter bevorzugt nicht aus der Mantelfläche des Einzugsrades herausragen. Bei Verwendung der erfindungsgemäßen Vorrichtung ist es vorteilhaft, wenn die Wuchshilfe im Komprimierungsbereich des Einzugsrades in Axialrichtung etwa mittig liegt. Vorzugsweise weist das Einzugsrad daher eine in Axialrichtung etwa mittige Führung für eine Wuchshilfe auf. Eine solche Führung kann beispielsweise durch einen keil- oder u-förmigen Einschnitt ausgebildet sein. Alternativ oder zusätzlich ist es vorteilhaft, dass das Einzugsrad mit einem in etwa wannenförmigen Querschnitt parallel zur Drehachse ausgebildet ist und bevorzugt in Axialrichtung von der Mitte ausgehend jeweils einen nach außen zunehmenden Radius aufweist.

Insbesondere ist das Einzugsrad vorzugsweise felgenartig ausgebildet.

Um eine einfache Wartung zu gewährleisten, ist vorzugsweise jedes der Mehrzahl von Einzugselementen lösbar an einer Drehachse angeordnet. Insbesondere ist es vorteilhaft, dass jedes der Mehrzahl von Einzugselementen lösbar und drehbar an einer Drehachse angeordnet ist. Hierdurch kann im Falle einer Beschädigung eines Einzugselementes dieses in einfacher Weise ausgetauscht werden.

Ein einfacher Austausch der Einzugselemente ist insbesondere in einer vorteilhaften Ausführungsform der erfindungsgemäßen Vorrichtung möglich, bei der um die Drehachse der Mehrzahl von Einzugselementen eine oder mehrere in Axialrichtung wahlweise verschiebbare Hülsen angeordnet sind. Weiterhin umgreift vorzugsweise jedes der Mehrzahl von Einzugselementen zumindest eine Hülse teilweise, so dass bei Anordnung der Hülse im Umgreifungsbereich des Einzugselementes das Einzugselement nicht von der Hülse und damit nicht von der Drehachse lösbar ist, jedoch bei Verschieben der Hülse, so dass der Umgreifungsbereich unmittelbar an der Drehachse anliegt, ein Lösen des Einzugselementes möglich ist. Der Umgreifungsbereich des Einzugselementes weist somit vorzugsweise eine Öffnung auf, welche kleiner als der Außenradius der Hülse, jedoch größer als der Außenradius der Drehachse ist.

Eine konstruktiv einfache Ausgestaltung ergibt sich in der vorteilhaften Ausführungsform, dass an jedem der Mehrzahl von Einzugselementen ein C-Profil zum Umgreifen der Hülse ausgebildet ist.

Vorzugsweise weist jedes der Mehrzahl von Einzugselementen an der in Drehrichtung weisenden Seite abgerundete Kanten auf. Insbesondere ist es vorteilhaft, dass jedes der Mehrzahl von Einzugselementen senkrecht zur Längserstreckung einen in etwa rechteckigen Querschnitt mit an der in Drehrichtung weisenden Seite abgerundeten Kanten aufweist. Hierdurch wird eine Beschädigung der Wuchshilfe bei Berührung durch die Einzugselemente vermieden. Vorzugsweise sind die Einzugselemente derart ausgebildet und angeordnet, dass die schmale Seite des rechteckigen Querschnitts in radiale Richtung und die längere Seite des rechteckigen Querschnitts in axiale Richtung weist. Hierdurch ist ein effizientes Eingreifen aufgrund der schmalen auf die Pflanzenteile einwirkenden Seite gewährleistet und gleichzeitig eine hohe Stabilität aufgrund der senkrecht zur Drehachse stehenden langen Seite des rechteckigen Querschnitts gewährleistet.

Die Einzugselemente weisen vorzugsweise einen etwa rechteckigen Querschnitt mit einer Höhe im Bereich 1 cm bis 5 cm, bevorzugt 1 cm bis 3 cm, weiter bevorzugt von etwa 2 cm und einer Breite im Bereich 0,3 cm bis 2 cm, bevorzugt 0,3 cm bis 1 cm, weiter bevorzugt etwa 0,6 cm auf.

Die abgerundeten Kanten sind vorzugsweise mit einem Radius von etwa 0,5 mm ausgebildet.

Vorzugsweise sind die Einzugselemente bzw. die Gruppen von Einzugselementen in Umfangsrichtung des Einzugsrades etwa gleichmäßig verteilt.

Vorzugsweise weist die Pflanzenführungseinheit zwischen 5 und 15 Einzugselemente bzw. Gruppen von Einzugselementen auf, bevorzugt zwischen 6 und 10 Einzugselementen bzw. Gruppen von Einzugselementen.

Insbesondere ist es vorteilhaft, das Einzugsrad im Querschnitt senkrecht zur Drehachse in etwa achteckig auszuführen und acht Gruppen von jeweils zwei Einzugselementen anzuordnen.

Die Einzugselemente weisen vorzugsweise eine Länge im Bereich 10 cm bis 30 cm, bevorzugt 15 cm bis 25 cm auf.

Untersuchungen des Anmelders haben weiterhin ergeben, dass eine Optimierung des Eingriffs in die Pflanzenteile und der Förderung der Pflanzenteile durch die Einzugselemente erzielt wird, indem an den radial nach außen abstehenden Enden der Einzugselemente ein Freiwinkel ausgebildet ist; vorzugsweise einen Freiwinkel im Bereich 2° bis 30°, weiter bevorzugt im Bereich 5° bis 15°, insbesondere etwa 10°.

Die Einzugselemente sind vorzugsweise aus Metall hergestellt und insbesondere vorzugsweise galvanisch verzinkt. Hierdurch ist eine lange Haltbarkeit gewährleistet.

Die erfindungsgemäße Vorrichtung ist insbesondere zum Entfernen von Rebentrieben von mindestens einem Spalierdraht im Weinbau geeignet. Insbesondere von solchen Rebentrieben, die zwar von der Rebe abgeschnitten sind, jedoch noch an dem Spalierdraht anhaften, wie typischerweise Rebentriebe nach dem händischen Vorschnitt.

Ebenso ist die erfindungsgemäße Vorrichtung auch bei anderen Pflanzenerziehungen anwendbar, bei denen Pflanzenteile an einer länglichen, zugstabilen, biegeschlaffen Wuchshilfe anhaften, insbesondere bereits von der Hauptpflanze abgetrennte Pflanzenteile.

Die erfindungsgemäße Vorrichtung umfasst vorzugsweise eine Haltevorrichtung, mittels dessen die Vorrichtung an einem Fahrzeug wie beispielsweise einem Traktor angeordnet ist. Vorzugsweise ist die Haltevorrichtung derart ausgebildet, dass die Vorrichtung zum Entfernen hinsichtlich der Höhe und des seitlichen Abstands zu dem Fahrzeug wahlweise bewegt werden kann. Solche Haltevorrichtungen sind bei Traktoren bereits bekannt.

Es ist insbesondere vorteilhaft, die erfindungsgemäße Vorrichtung grundsätzlich nach der Vorrichtung gemäß WO 2009/051498 A2 bzw. einer vorzugsweisen Ausführungsform hiervon auszubilden. Auf diesen Stand der Technik wird vollumfänglich Bezug genommen und er wird ausdrücklich vollumfänglich per Referenz eingebunden. Die Weiterbildung der vorbekannten Vorrichtung besteht insbesondere in der Ausbildung der Pflanzenführungseinheit wie zuvor beschrieben.

Untersuchungen des Anmelders haben ergeben, dass die Fehleranfälligkeit hinsichtlich des Einzugs und/oder der Komprimierung der Zuführung der Pflanzenteile zu der Ablöseeinheit mittels der Pflanzenführungseinheit zusätzlich verringert wird, wenn die Vorrichtung in einer vorteilhaften Ausführungsform zusätzlich mindestens eine Pflanzenrichteinheit umfasst, mit mindestens einem motorisch angetriebenen Pflanzentransportmittel, welche Pflanzenausrichteinheit vor der Pflanzenführungseinheit angeordnet ist, hinsichtlich der Relativbewegung der Wuchshilfeführung zu der Vorrichtung und welche Pflanzenausrichteinheit derart angeordnet und dazu ausgebildet ist, mittels des Pflanzentransportmittels von der Wuchshilfe abstehende Pflanzenteile in Richtung einer bevorzugten Einzugsorientierung der Pflanzenführungseinheit zu bewegen.

Die Pflanzenausrichteinheit ist vorzugsweise derart angeordnet und dazu ausgebildet, mittels des Pflanzentransportmittels von der Wuchshilfe abstehende Pflanzenteile in Richtung einer bevorzugten Einzugsorientierung der Pflanzenführungseinheit zu bewegen.

Untersuchungen des Anmelders haben gezeigt, dass die Verwendung einer Pflanzenausrichteinheit, welche mittels mindestens eines motorisch angetriebenen Pflanzentransportmittels die Pflanzen zumindest in Richtung einer bevorzugten Einzugsorientierung der Pflanzenzuführungseinheit bewegt, die Bildung vorgenannter Staus und damit das Anhäufen vorgenannter Knäuel oder Ballen vermieden wird.

Vorzugsweise ist die Pflanzenausrichteinheit derart angeordnet und dazu ausgebildet, mittels des Pflanzentransportmittels von der Wuchshilfe abstehende Pflanzenteile zu drehen. Vorzugsweise erfolgt die Drehung um eine Drehachse, welche Drehachse in etwa mit der Längsachse der Wuchshilfe im Bereich der Pflanzenausrichteinheit übereinstimmt.

Untersuchungen des Anmelders haben gezeigt, dass typische Pflanzenzuführungseinheiten eine bevorzugte Einzugsorientierung hinsichtlich einer Erstreckung von Pflanzenteilen senkrecht zu der Wuchshilfe aufweisen. Durch Drehen solcher Pflanzenteile, die von der Wuchshilfe abstehen, insbesondere die hinsichtlich ihrer Längserstreckung senkrecht oder in einem nicht vernachlässigbaren Winkel, (beispielsweise > 30°) von der Wuchshilfe abstehen, wird die Funktion der Pflanzenführungseinheit durch eine Ausrichtung solcher Pflanzenteile erheblich verbessert. Hierbei ist es wünschenswert, die Pflanzenteile möglichst in die bevorzugte Einzugsorientierung zu bringen. Eine Verbesserung wird jedoch auch dann bereits erzielt, wenn die Pflanzenteile lediglich über eine gewisse Teilstrecke in Richtung der bevorzugten Einzugsorientierung bewegt werden.

Da die Pflanzenteile an der Wuchshilfe anhaften und ein Ablösen von der Wuchshilfe oder einer Relativverschiebung der Pflanzenteile zu der Wuchshilfe mittels der Pflanzenausrichteinheit in der Regel nicht möglich ist, ist es vorteilhaft, wie zuvor beschrieben mittels des Pflanzentransportmittels die abstehenden Pflanzenteile zu drehen. Denn auch solche Pflanzenteile, die durch Verästelungen oder um Windungen stabil mit der Wuchshilfe verbunden sind, lassen sich in der Regel durch geringe Krafteinwirkung drehen, insbesondere um eine Drehachse, welche in etwa mit der Längsachse der Wuchshilfe im Bereich der Pflanzenausrichteinheit übereinstimmt.

Durch das vorgeschaltete Drehen insbesondere von der Wuchshilfe abstehender Pflanzenteile, welche sich in einer ungünstigen Orientierung hinsichtlich des Einzugs durch die Pflanzenzuführungseinheit befinden, wird somit in einfacher Weise die Fehleranfälligkeit der erfindungsgemäßen Vorrichtung und des erfindungsgemäßen Verfahrens erheblich verringert.

Untersuchungen des Anmelders haben ergeben, dass das Pflanzentransportmittel vorzugsweise als lineares Fördermittel ausgebildet ist. Hierdurch ergibt sich ein robuster und kostengünstiger Aufbau des Fördermittels und gleichzeitig eine effiziente und fehlerunanfällige Orientierung von der Wuchshilfe abstehender Pflanzenteile in Richtung einer bevorzugten Einzugsorientierung der Pflanzenzuführungseinheit.

Es liegt im Rahmen der Erfindung, typische, dem Fachmann bekannte lineare Fördermittel zu verwenden, beispielsweise Förderbänder oder Rollenbahnen.

Insbesondere vorteilhaft ist jedoch die Ausbildung des Pflanzentransportmittels als Förderschnecke. Untersuchungen des Anmelders haben ergeben, dass eine Förderschnecke robust und gleichzeitig kostengünstig ausbildbar ist, beispielsweise durch die an sich bekannten in Metall ausgebildeten Förderschnecken, welche mittels eines Motors, wie beispielsweise eines Hydraulikmotors oder eines Elektromotors, um die Symmetrieachse der Schneckenwelle gedreht werden.

Durch eine solche Schnecke wird in einfacher Weise ein linearer Transport des Teilbereiches des Pflanzenteils, welcher mit der Schnecke in Berührung kommt, erzielt. Durch den linearen Transport wird in einfacher Weise aufgrund des Anhaftens des Pflanzenteils an der Wuchshilfe eine Drehung des Pflanzenteils um die Wuchshilfe erzielt. Die Ausbildung des Pflanzentransportmittels als Förderschnecke weist darüber hinaus den Vorteil auf, dass im Falle einer Umwicklung der Förderschnecke durch Pflanzen oder andere Objekte eine solche in kurzer Zeit manuell behoben werden kann und darüber hinaus nur eine geringe Verletzungsgefahr besteht, selbst wenn ein Benutzer im Betrieb mit der sich drehenden Förderschnecke in Berührung kommen sollte.

Die Förderschnecke ist vorzugsweise an einem Ende, bevorzugt an beiden Enden, konisch zulaufend ausgebildet. Dies bedeutet, dass in axialer Richtung zu dem jeweiligen Ende hin sich die Ganghöhe der Schnecke verringert. Untersuchungen des Anmelders haben gezeigt, dass durch ein solches konisches Zulaufen Fehler aufgrund eines Umwickelns der Schnecke durch Pflanzenteile nahezu ausgeschlossen werden.

Die Pflanzenausrichteinheit umfasst vorzugsweise einen motorischen Antrieb zum Drehen der Förderschnecke. Untersuchungen des Anmelders haben ergeben, dass insbesondere ein Drehen der Förderschnecke mit einer Umdrehungsgeschwindigkeit im Bereich 100 U/min bis 400 U/min, bevorzugt im Bereich 200 U/min bis 250 U/min vorteilhaft ist.

Weiterhin ist es vorteilhaft, dass die Förderschnecke einen Durchmesser im Bereich 3 cm bis 25 cm, bevorzugt im Bereich 5 cm bis 22 cm, weiter bevorzugt im Bereich 9 cm bis 20 cm aufweist.

Weiterhin ist es vorteilhaft, dass die Förderschnecke eine Ganghöhe im Bereich 10 cm bis 15 cm, bevorzugt etwa 12,5 cm aufweist.

Die vorgenannten vorteilhaften Ausgestaltungen ergeben jeweils für sich genommen und insbesondere in Kombination zweier oder mehrerer der vorgenannten vorteilhaften Ausgestaltungen ein optimiertes Förderverhalten der Förderschnecke für die Pflanzenteile.

Vorzugsweise ist das als lineares Fördermittel ausgebildete Pflanzentransportmittel mit Förderrichtung in einem vorgegebenen Winkel zu der bevorzugten Einzugsorientierung der Pflanzenführungseinheit angeordnet. Untersuchungen des Anmelders haben ergeben, dass insbesondere eine Anordnung in einem Winkel im Bereich 3° bis 20°, bevorzugt im Bereich 5° bis 15°, weiter bevorzugt etwa 9° vorteilhaft ist. Durch die vorgenannten vorzugsweisen Anstellwinkel bei Draufsicht von vorne auf die erfindungsgemäße Vorrichtung wird erzielt, dass bei Drehen der Pflanzenteile um die Wuchshilfe diese möglichst weit in Richtung der bevorzugten Einzugsorientierung durch das lineare Fördermittel gedreht werden.

Hierbei liegt es im Rahmen der Erfindung, dass der Winkel zwischen Förderrichtung des linearen Fördermittels und der bevorzugten Einzugsorientierung der Pflanzenführungseinheit durch einen Benutzer wahlweise vorgebbar ist, insbesondere dass das lineare Fördermittel schwenkbar und wahlweise feststellbar an der Vorrichtung angeordnet ist. Hierdurch kann der Benutzer den vorgenannten Winkel gegebenenfalls optimieren.

Es liegt im Rahmen der Erfindung, dass bei Draufsicht von vorne in einer Ebene senkrecht zur Längserstreckung der Wuchshilfe eine Drehung der Pflanzenteile durch das lineare Fördermittel in oder entgegen des Uhrzeigersinns erfolgt. Untersuchungen des Anmelders haben ergeben, dass vorzugsweise das lineare Fördermittel derart ausgebildet ist, dass bei Betrieb von dem Fördermittel erfasste Teilbereiche der Pflanzenteile nach oben bewegt werden. Hierdurch wird der Kontakt zwischen Pflanzenteil und linearem Fördermittel verbessert und dadurch das Einwirken und die Ausrichtung optimiert.

Der lineare. Förderweg des Fördermittels weist vorzugsweise eine Länge im Bereich von 0,3 m bis 1,2 m, bevorzugt im Bereich 0,5 m bis 0,7 m auf. Untersuchungen des Anmelders haben ergeben, dass größere Längen die Handhabung der Vorrichtung erheblich erschweren und kleinere Längen keine ausreichende Bewegung der Pflanzenteile in Richtung der bevorzugten Einzugsorientierung ermöglichen.

Ebenso liegt es im Rahmen der Erfindung, den linearen Förderweg auf zwei oder mehr Förderelemente aufzuteilen, beispielsweise durch Aneinanderreihung zwei oder mehrere linearer Fördermittel. Insbesondere ist es vorteilhaft, zwischen den Fördermitteln in einer Ebene senkrecht zur Längserstreckung der Wuchshilfe einen Winkel im Bereich 5° bis 45°, bevorzugt im Bereich 10° bis 20°, weiter bevorzugt etwa 15° vorzusehen. Hierdurch wird eine Kreisbewegung senkrecht zu der Wuchshilfe, welche Kreisbewegung ein von dem Fördermittel linear bewegtes Pflanzenteil ausführt, angenähert.

Der Abstand der Pflanzenausrichteinheit senkrecht zu einer die Pflanzenführungseinheit durchlaufenden Wuchshilfe ist vorzugsweise < 50 cm und liegt bevorzugt im Bereich zwischen 5 cm und 30 cm, weiter bevorzugt im Bereich zwischen 10 cm und 20 cm zu der Wuchshilfe. Hierdurch ist gewährleistet, dass einerseits keine Knäuel oder Ballen mit den vorgenannten negativen Folgen entstehen und andererseits Pflanzenzeile, die problemlos von der Pflanzenführungseinheit eingezogen werden, nicht unnötigerweise von der Pflanzenausrichteinheit beaufschlagt werden.

Hinsichtlich des Abstandes in Richtung der Längserstreckung einer die Pflanzenführungseinheit durchlaufenden Wuchshilfe ist das Pflanzentransportmittel vorzugsweise mit einem Abstand < 50 cm, bevorzugt im Bereich zwischen 5 cm und 30 cm, weiter bevorzugt im Bereich zwischen 10 cm und 20 cm zu der Pflanzenführungseinheit angeordnet. Hierdurch wird ein nachträgliches Verrutschen oder Verdrehen der Pflanzenteile nach Beaufschlagung durch das Pflanzentransportmittel nahezu vermieden.

Vorzugsweise sind Ablöseeinheit und Wuchshilfeführung derart zusammenwirkend ausgebildet, dass bei Betrieb das Ablöseelement im Bereich der Drehachse einen Abstand in Axialrichtung im Bereich von 5 mm bis 30 mm, bevorzugt im Bereich von 10 mm bis 20 mm, weiter bevorzugt etwa 15 mm zu der Wuchshilfe aufweist.

Als vorzugsweise Ausführungsform der erfindungsgemäßen Vorrichtung wird insbesondere auf die Figuren 1 bis 11 der WO 2009/051498 und der dazugehörigen Figurenbeschreibung Bezug genommen, wobei bei einer solchen vorzugsweisen Ausführungsform die Pflanzenführungseinheit wie zuvor beschrieben auszubilden ist.

Weitere Vorteile und Eigenschaften der vorliegenden Erfindung werden im Folgenden anhand von einem Ausführungsbeispiel und den Figuren erläutert. Dabei zeigt:
- Figur 1: ein Ausführungsbeispiel der erfindungsgemäßen Vorrichtung in Seitenansicht mit dargestellten Wuchshilfen, wobei die Seitenansicht gemäß Figur 1 bei Anordnen der Vorrichtung an eine Haltevorrichtung die der Haltevorrichtung abgewandte Seite zeigt;
- Figur 1a: eine Schnittdarstellung der Seitenansicht gemäß Figur 1, wobei die Schnittebene in der Rückansicht gemäß Figur 5 als Linie A gekennzeichnet ist; die Schnittebene steht senkrecht zur Zeichenebene gemäß Rückansicht in Figur 5;
- Figur 2: eine Seitenansicht der einer Haltevorrichtung zugewandten Seite;
- Figur 3: eine Vorderansicht der Vorrichtung gemäß Figur 1 mit dargestellten Wuchshilfen;
- Figur 4: eine Draufsicht von oben auf die Vorrichtung gemäß Figur 1;
- Figur 4a: die Draufsicht gemäß Figur 4, wobei eine obere Abdeckung sowie ein oberes Einzugsrad entfernt wurden und Wuchshilfen dargestellt sind;
- Figur 4b: eine Schnittdarstellung gemäß Schnittlinie B in Figur 3, wobei die Schnittebene in Figur 3 senkrecht zur Zeichenebene steht;
- Figur 5: eine Ansicht von hinten auf die Vorrichtung gemäß Figur 1;
- Figur 6: eine perspektivische Darstellung der Vorrichtung gemäß Figur 1;
- Figur 7: eine Vorderansicht gemäß Figur 3, bei der lediglich das obere und das untere Einzugsrad dargestellt sind;
- Figur 8: in Teilbild a) eine perspektivische Darstellung eines Ausführungsbeispiels eines Einzugselementes in und Teilbild b) eine Seitenansicht des Einzugselementes sowie rechts daneben die Querschnittsfläche gemäß Schnittlinie BB in Figur 8b, wobei die Schnittebene senkrecht zur Zeichenebene in Figur 8 steht und
- Figur 9: eine Ausschnittvergrößerung aus Figur 1a ,bei der insbesondere das Schnittbild des unteren Einzugsrades 7a dargestellt ist.

Sämtliche Figuren zeigen eine Vorrichtung 1 zum Entfernen von Pflanzenteilen von mindestens einer länglichen, zugstabilen, biegeschlaffen Wuchshilfe, welche Vorrichtung ein Ausführungsbeispiel der erfindungsgemäßen Vorrichtung darstellt. Gleiche Bezugszeichen in den Figuren bezeichnen gleiche Elemente.

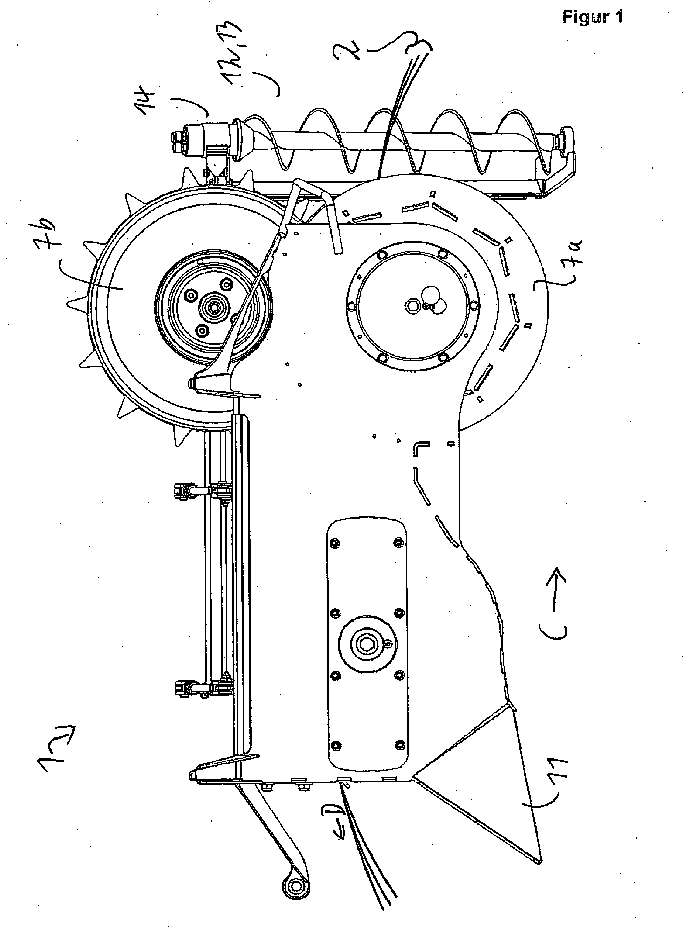

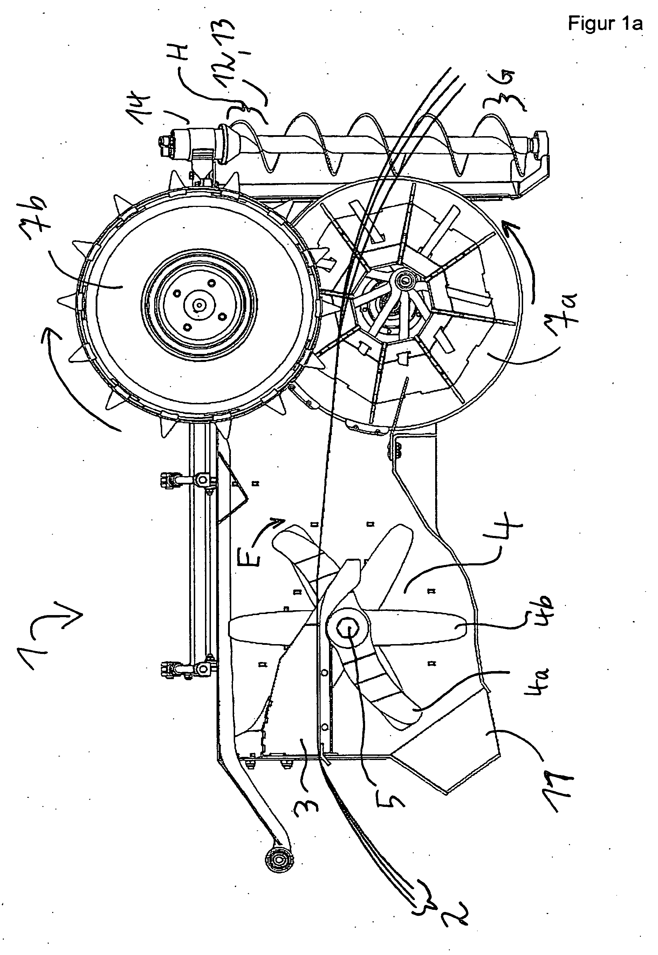

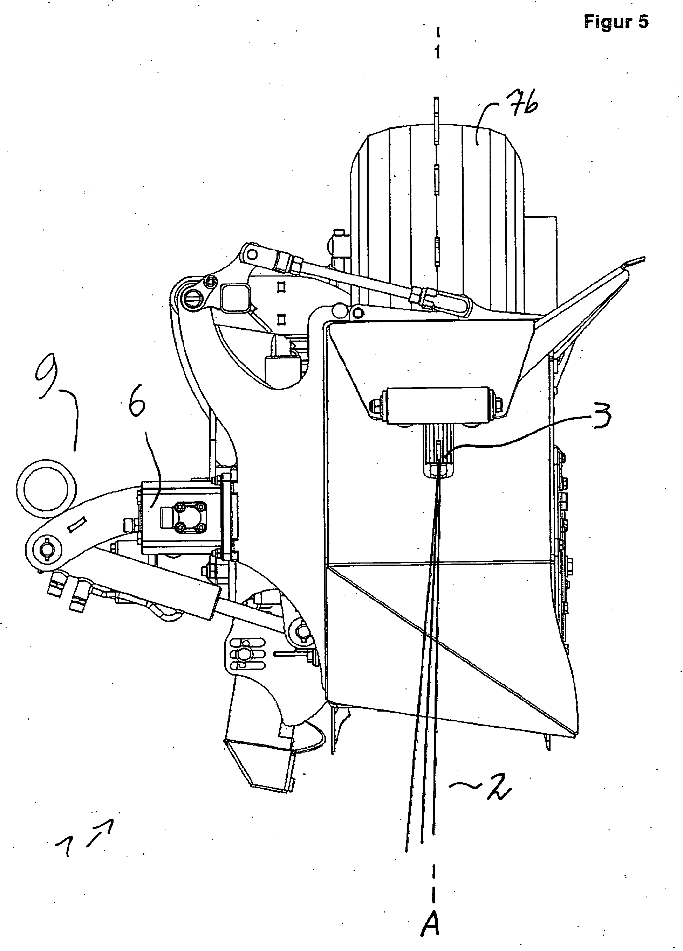

Die Vorrichtung 1 ist zum Entfernen von Pflanzenteilen von beliebigen länglichen, zugstabilen, biegeschlaffen Wuchshilfen geeignet, wie beispielsweise von Seilen oder Drähten. Insbesondere ist die Vorrichtung 1 zum Einsatz im Weinbau geeignet, um Rebentriebe, welche von der Rebe abgeschnitten sind, jedoch noch an als Spalierdrähten ausgebildeten Wuchshilfen 2 anhaften, zu entfernen. In den Figuren 1, 1a, 3, 4a und 5 sind zum besseren Verständnis jeweils drei Wuchshilfen 2 dargestellt.

Die Vorrichtung 1 umfasst eine Wuchshilfeführung 3, welche als nach oben offener Führungskanal mit einem in etwa u-förmigen Querschnitt senkrecht zur Längsachse einer in der Wuchshilfeführung 3 liegenden Wuchshilfe 2 ausgebildet ist. Mittels der Wuchshilfeführung 3 werden die Wuchshilfen 2 insbesondere im Bereich einer Ablöseeinheit 4 der Vorrichtung 1 geführt. Dies ist insbesondere in den Figuren 1a, 4a und 3 ersichtlich.

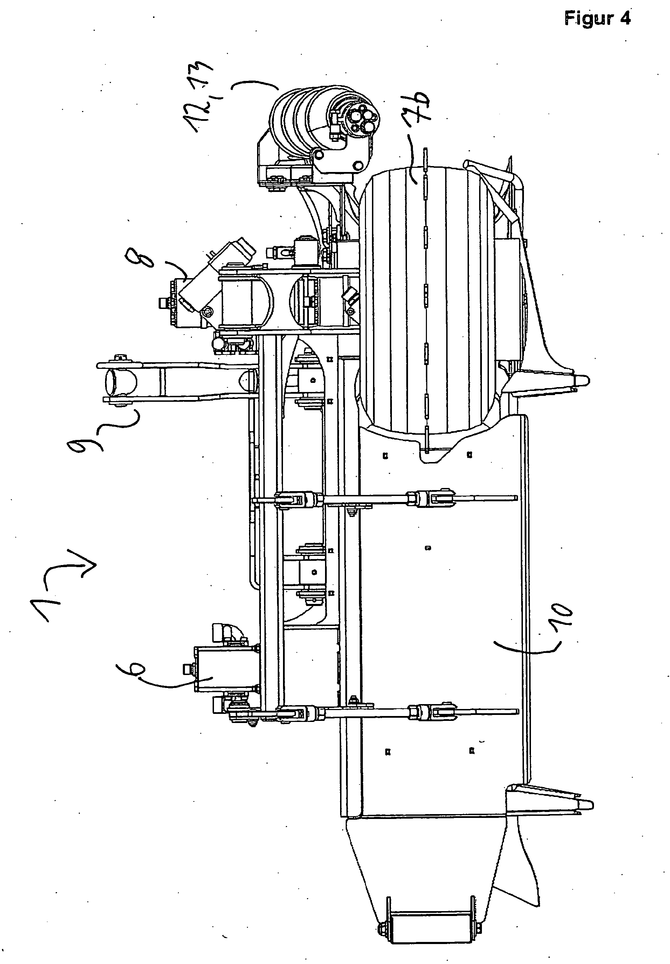

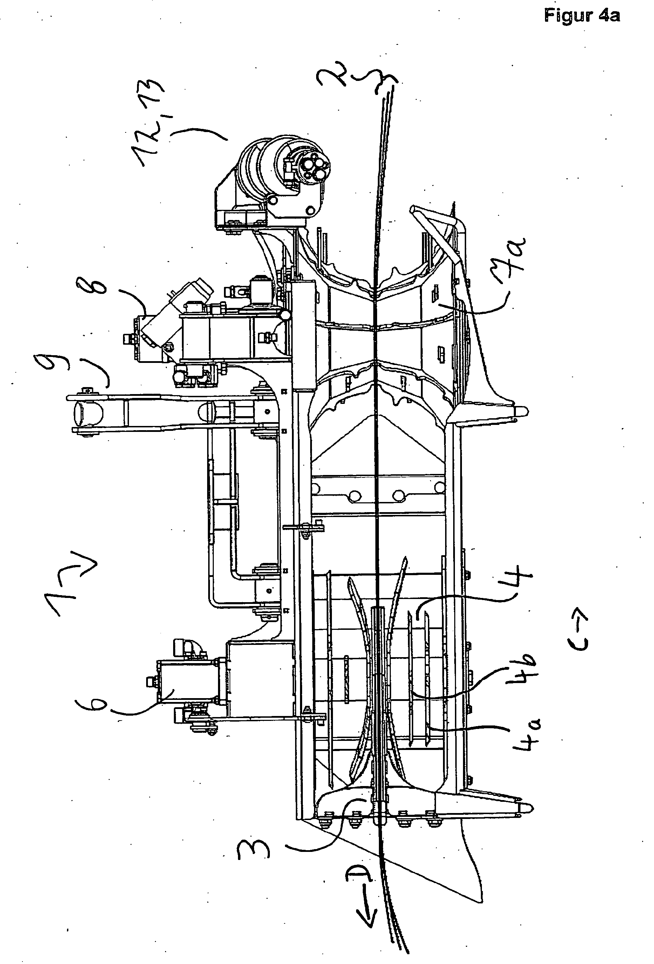

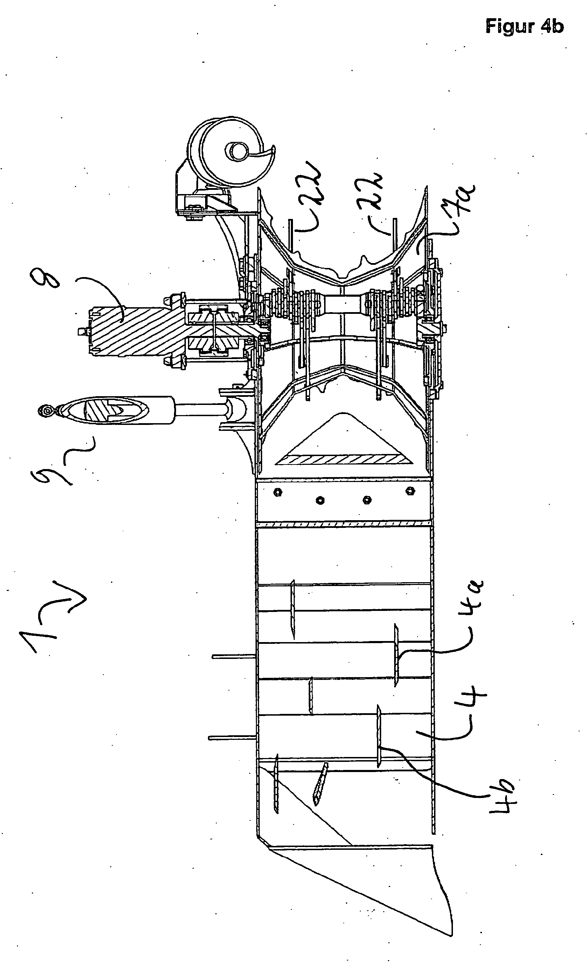

Die Ablöseeinheit 4 umfasst eine Vielzahl von Ablöseelementen, von denen in Figur 1a, Figur 4a und 4b exemplarisch zwei Ablöseelemente 4a und 4b gekennzeichnet sind. Die Ablöseelemente sind jeweils als Schneidmesser ausgebildet, welche an einer gemeinsamen Welle 5 angebracht sind und mittels eines ersten Motors 6 in Rotation versetzt werden können.

Die Vorrichtung 1 umfasst weiterhin eine Pflanzenführungseinheit 7, welche ein unteres Einzugsrad 7a und ein oberes Einzugsrad 7b umfasst.

Die Einzugsräder 7a und 7b werden mittels eines zweiten Motors 8 gegensinnig angetrieben, gemäß der Pfeile in Figur 1 a.

Zur Verwendung der Vorrichtung 1 wird diese mittels einer seitlich angeordneten Halterung 9 an einer (nicht dargestellten) Haltevorrichtung angebracht, welche Haltevorrichtung wiederum an einem (nicht dargestellten) Traktor angebracht ist. Mittels der Haltevorrichtung kann die Vorrichtung 1 bezüglich der Höhe variiert werden sowie bezüglich der seitlichen Ausrichtung in Fahrtrichtung rechts vor dem Traktor.

Zur Verwendung der Vorrichtung in einem Weinberg, beispielsweise mit Guyot oder Kordonerziehung (wobei diese Beispiele nicht einschränkend sind), entweder die betreffenden Spalierdrähte per Hand von den Haltepfosten entlang einer Weinrebenzeile entfernt werden oder mittels entsprechender Haltevorrichtungen, wie beispielsweise nach oben offenen Klemmhaken, an den Haltepfosten angebracht sein, so dass sie nach oben abgezogen werden können. An dem ersten und letzten Pfosten einer Weinrebenzeile sind die Spalierdrähte unlösbar angebracht.

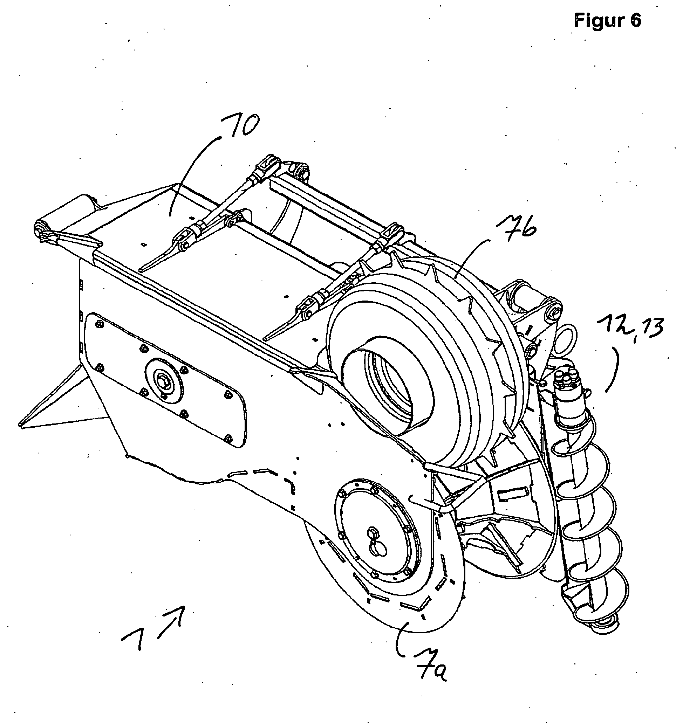

Zu Beginn wird die Vorrichtung in eine Position nahe des ersten Pfostens gebracht und das obere Einzugsrad 7b sowie eine obere Abdeckung 10 (siehe Figuren 4 und 6) werden durch Verschwenken weggeklappt, so dass sich die Draufsicht gemäß Figur 4a ergibt (wobei die weggeklappten Elemente nicht dargestellt sind) und die Spalierdrähte 2 von oben auf das untere Einzugsrad 7a gelegt und in die Wuchshilfeführung 3 von oben eingeführt werden. Anschließend werden obere Abdeckung 10 und oberes Einzugsrad 7b wieder in die ursprüngliche Position gebracht.

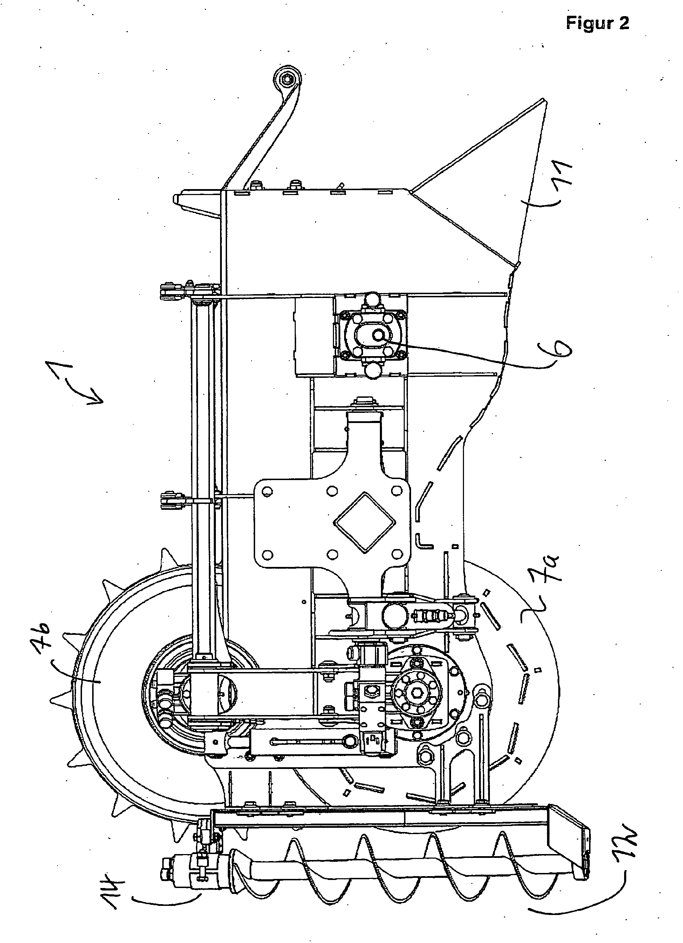

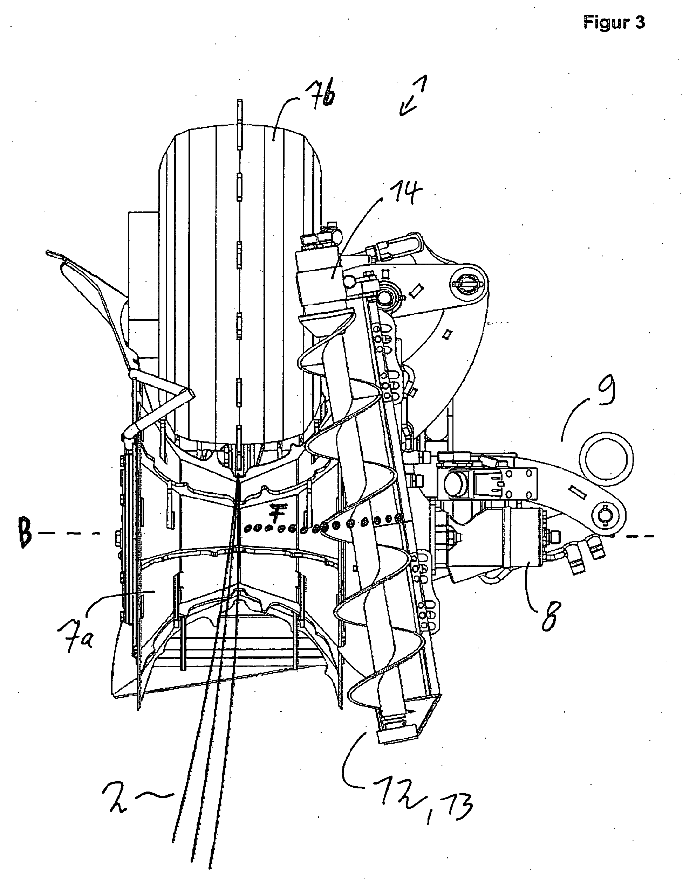

Die Wuchshilfen 2 verlaufen somit zwischen oberem Einzugsrad 7b und unterem Einzugsrad 7a (siehe Figur 3) und durch die Wuchshilfeführung 3 hindurch und somit ebenfalls zwischen den Ablöseelementen der Ablöseeinheit 4 hindurch (siehe Figuren 2a und 4a). Die beiden Ablöseelemente, zwischen denen die Wuchshilfe geführt ist, weisen vorzugsweise zueinander einen Abstand in Axialrichtung im Bereich von 10 mm bis 50 mm, bevorzugt im Bereich von 20 mm bis 40 mm, insbesondere bevorzugt im Bereich von 25 mm bis 35 mm, weiter bevorzugt etwa 30 mm auf. Weiter bevorzugt wird die Wuchshilfe in etwa mittig zwischen diesen beiden Ablöseelementen geführt. In dem hier beschriebenen Ausführungsbeispiel weisen die beiden Ablöseelemente 4, zwischen denen die Wuchshilfen 2 in etwa mittig geführt sind, einen Abstand zueinander in Axialrichtung von 31 mm auf.

Anschließend wird mittels des Traktors die Vorrichtung 1 oberhalb der Pfosten der Weinrebenzeile entlanggefahren, so dass die Spalierdrähte 2 nach oben aus den Halterungen der Pfosten herausgezogen werden, sofern sie nicht bereits vorher aus entsprechenden Halterungen entfernt wurden. Der Traktor fährt nun entlang der Weinrebenzeile, so dass die Wuchshilfen 2 während dieser Bewegung durch die Vorrichtung 1 hindurchgeleitet werden. In den Figuren 1 und 4a ist die Bewegungsrichtung der Vorrichtung durch einen Pfeil C gekennzeichnet und die Relativbewegung der Wuchshilfen 2 zu der Vorrichtung 1 durch einen Pfeil D, welche Relativbewegung entsprechend entgegengesetzt zu der Bewegungsrichtung C der Vorrichtung 1 verläuft.

An den Spalierdrähten anhaftende Pflanzenteile, insbesondere Rebentriebe werden somit zwischen den Einzugsrädern 7a und 7b hindurchgeführt und hierbei gegebenenfalls durch Zusammendrücken komprimiert und zu der Ablöseeinheit 4 (zusammen mit dem sich relativ zu der Vorrichtung 1 hindurchbewegenden Wuchshilfen 2) zugeführt.

Die als Schneidmesser ausgebildeten, rotierenden Ablöseelemente 4a, 4b lösen die Pflanzenteile von den Wuchshilfen 2 ab, durch Häckseln, Abschlagen und/oder Zerstückeln.

Mittels der Wuchshilfeführung 3 wird gewährleistet, dass die Wuchshilfen 2 nicht mit den Ablöseelementen 4a, 4b der Ablöseeinheit 4 in Kontakt kommen und somit nicht durch diese beschädigt und insbesondere nicht durchtrennt werden.

Die Ablöseelemente 4a, 4b rotieren hierbei in der Ansicht in Figur 1 a im Uhrzeigersinn, wie durch Pfeil E gekennzeichnet. Dies bedeutet, dass insbesondere oberhalb der Welle 5 sich die Ablöseelemente 4a, 4b in entgegengesetzter Richtung zu der Wuchshilfe 2 und an der Wuchshilfe anhaftender Pflanzenteile bewegen. Hierdurch wird ein besonders effizientes Ablösen gewährleistet.

Die abgelösten Pflanzenteile werden an einem Auslass 11 (siehe Figuren 1, 1 a und 2) ausgegeben.

Nachdem in einer Weinrebenzeile die Pflanzenteile von den Wuchshilfen 2 entfernt wurden, werden die Wuchshilfen 2 wieder in entsprechenden Halterungen an den Pfosten der Weinrebenzeile befestigt.

Ergänzend wird insbesondere zur Durchführung des Verfahrens auf WO 2009/051498, insbesondere Seite 26, Zeile 25 bis Seite 27, Zeile 29 Bezug genommen.

Wie insbesondere in Figur 1 a ersichtlich, weist die Vorrichtung 1 neben dem unteren Einzugsrad 7a ein als oberes Einzugsrad 7b ausgebildetes Gegenelement, d. h. ein Gegeneinzugsrad auf, welche gegensinnig angetrieben werden.

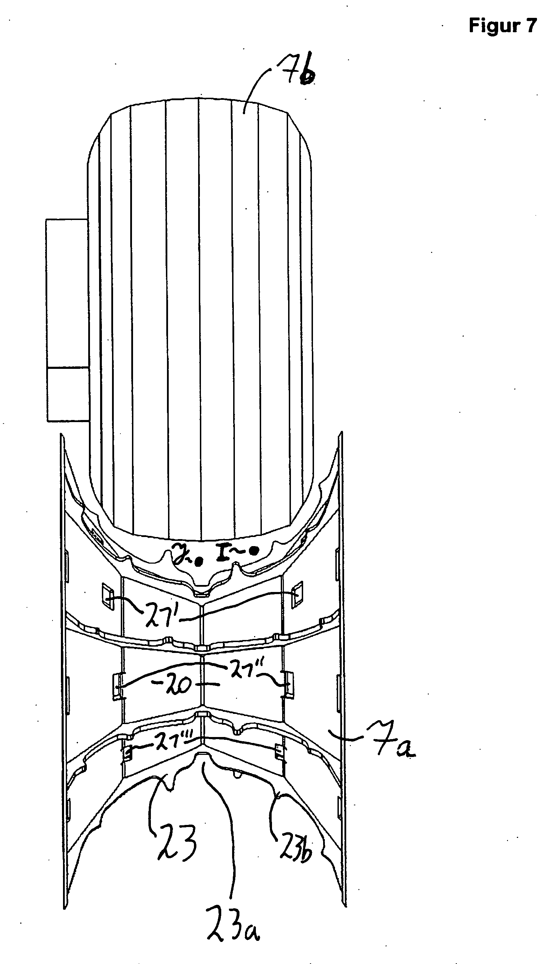

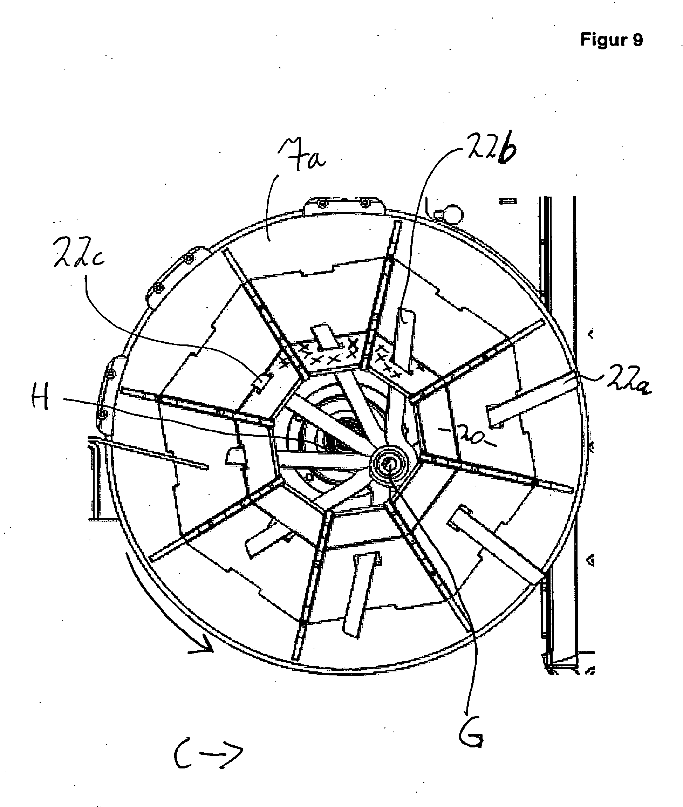

Wie insbesondere in den Figuren 7 und 9 ersichtlich, weist die Mantelfläche 20 mehrere paarweise angeordnete Ausnehmungen auf, von denen in Figur 7 beispielhaft die Paare 21', 21" und 21''' gekennzeichnet sind.

Diese Ausnehmungen 21 sind von Einzugselementen 22 durchdrungen, von denen beispielsweise in Figur 9 drei Einzugselemente 22a, 22b und 22c gekennzeichnet sind.

Die Mantelfläche 20 ist im Querschnitt achteckig ausgebildet, wobei die acht sich hierdurch ergebenden Sektionen der Mantelfläche des unteren Einzugsrades 7a jeweils zwei Ausnehmungen aufweisen und somit jeweils von einem Paar von Einzugselementen 22 durchdrungen sind.

In Figur 9 ist aufgrund des mittigen Schnitts in der Schnittdarstellung jeweils nur ein Einzugselement 22 der Paare von Einzugselementen zu sehen.

Die Einzugselemente 22 sind drehbar um eine gemeinsame Drehachse (Bezugszeichen G in Figur 9 drehbar angeordnet. Die Drehachse G ist parallel zur Drehachse H des unteren Einzugsrades 7a angeordnet und von dieser beabstandet. Aufgrund der Anordnung des oberen Einzugsrades 7b mit in etwa vertikal über der Drehachse H des unteren Einzugsrades 7a angeordneten Drehachse ergibt sich der in Figur 9 durch "X" gekennzeichnete Komprimierungsbereich, welcher im wesentlichen den Bereich zwischen den Längserstreckungen der beiden Einzugsräder darstellt. Die Drehachse G ist sowohl in Bewegungsrichtung C der Vorrichtung nach vorne, als auch in einer von dem Komprimierungsbereich abgewandten Richtung von der Drehachse H des unteren Einzugsrades 7a beabstandet.

Hierdurch ergibt sich, dass Einzugselemente in einer Stellung nach vorne hinsichtlich der Bewegungsrichtung der Vorrichtung, beispielsweise Einzugselement 22a in Figur 9 weiter aus der Mantelfläche 20 des unteren Einzugsrades 7a herausragt, als in einer Stellung nach hinten, beispielsweise wenn aufgrund der Drehung des Einzugsrades 7a das Einzugselement 22a die Stellung des Einzugselementes 22c in Figur 9 erreicht hat.

Durch diese Ausgestaltung des unteren Einzugsrades 7a und der Einzugselemente 22 werden an den Wuchshilfen 2 anhaftende Pflanzenteile somit zusätzlich von den Einzugselementen 22 erfasst und in den Komprimierungsbereich zwischen den beiden Einzugsrädern 7a und 7b geleitet. Im Komprimierungsbereich ragen die Einzugselemente bereits weniger aus der Mantelfläche 20 heraus und in einer Stellung nach hinten, beispielsweise gemäß Einzugselement 22c in Figur 9 ragen die Einzugselemente nicht oder nur unwesentlich aus der Mantelfläche heraus. Die Einzugselemente geben in der Stellung nach hinten somit die Pflanzenteile frei, so dass ein Umwickeln des Einzugsrades 7a durch die Pflanzenteile vermieden wird und darüber hinaus ein Einwirken der Einzugselemente auf die Wuchshilfen 2 in dieser Stellung vermieden wird.

In Figur 7 ist ersichtlich, dass sich der Abstand der Ausnehmungen 21' über 21" zu 21''' jeweils verringert. Die Gruppen der diese Ausnehmungen durchdringenden Einzugselemente weisen somit in Drehrichtung des Einzugsrades einen zunehmenden Abstand in Axialrichtung auf. Hierdurch wird erzielt, dass eine seitlich verrutschte Wuchshilfe, beispielsweise an Position I in Figur 7 bei Drehung des unteren Einzugsrades 7a durch den sich verkleinernden Abstand zwischen den Einzugselementen einer Gruppe wieder in eine mittige Position (Position J) gebracht wird.

Wie insbesondere in Figur 1 ersichtlich, weist das obere Einzugsrad 7b umfangsseitig zahnradartige Fortsätze auf, wodurch der Einzug der Pflanzenteile zusätzlich verbessert wird.

Die paarweise Anordnung der Einzugselemente 22 auf der gemeinsamen Drehachse nebeneinander ist ebenfalls in dem Schnittbild gemäß Figur 4b ersichtlich.

Wie insbesondere in Figur 7 ersichtlich, weist das untere Einzugsrad 7a einen in etwa wannenförmigen Querschnitt parallel zur Drehachse auf, wobei ausgehend von einer mittigen Position in Axialrichtung der Radius nach außen hin zunimmt.

Weiterhin weist das Einzugsrad 7a sich parallel zur Drehachse erstreckende Einzugsstege 23 auf, welche in axial mittiger Position einen u-förmigen Bereich 23a zur mittigen Führung der Wuchshilfen sowie mehrere zackenartige Ausbildungen 23b zum besseren Einzug der Pflanzenteile aufweisen.

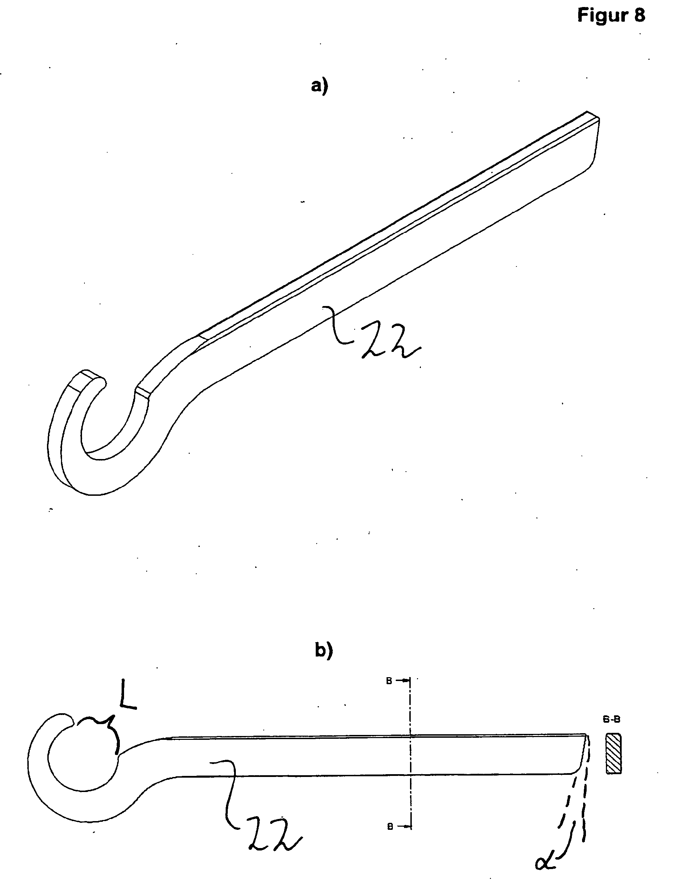

Wie in Figur 8 ersichtlich, sind die Einzugselemente 22 länglich mit rechteckigem Querschnitt ausgebildet und weisen gemäß Schnittbild B-B an der in Drehrichtung liegenden Seite (oben in Figur 8) abgerundete Kanten auf. An der der Drehachse abgewandten Seite weisen die Einzugselemente 22 einen Freiwinkel α von 10° auf, wodurch die Einzugswirkung auf die Pflanzenteile erhöht wird.

An der der Drehachse zugewandten Seite weisen die Einzugselemente ein C-Profil zum Umgreifen der die Drehachse umgebenden Hülse auf. Die Öffnung L des C-Profils ist dabei derart gewählt, dass sie kleiner als der Außenradius der Hülse ist. Bei Betrieb kann sich der Einzugsfinger 22 somit nicht von der Hülse und damit nicht von der Drehachse lösen. Wird hingegen die Hülse in axialer Richtung verschoben, so dass das C-Profil unmittelbar die Drehachse umgreift, so kann das Einzugselement 22 entnommen werden, da der Abstand L größer als der Durchmesser der Drehachse ist.

Das Paar von Einzugselementen 22 mit dem geringsten Abstand weist eine Länge von etwa 17 cm auf. Hiervon ausgehend erhöht sich die Länge der Einzugselemente 22 mit größer werdendem Abstand in axialer Richtung zwischen den Paaren bis zu einer Länge von etwa 22 cm der Einzugselemente mit dem maximalen Abstand in axialer Richtung.

Die Pflanzenführungseinheit 7 ist aufgrund der Ausgestaltung mit dem unteren Einzugsrad 7a und dem oberen Einzugsrad 7b, welche parallele Drehachsen aufweisen, insbesondere zum Einzug von Pflanzenteilen, welche sich in etwa entlang der Wuchshilfen 2 erstrecken sowie von Pflanzenteilen, welche in der Vorderansicht gemäß Figur 3 in etwa senkrecht stehen, d. h. Pflanzenteile, deren Längserstreckung zumindest in Projektion auf eine Ebene senkrecht zu den Wuchshilfen 2 in etwa senkrecht zu der Drehachse des unteren Einzugsrades 7a und damit auch senkrecht zur Drehachse des oberen Einzugsrades 7b steht.

Bei von den Wuchshilfen 2 abstehenden Pflanzenteilen, die zumindest in Projektion auf eine senkrecht zu den Wuchshilfen 2 stehende Ebene eine in der Darstellung in Figur 3 waagrechte Komponente aufweisen, insbesondere bei senkrecht und in der Ansicht in Figur 3 waagrecht von den Wuchshilfen 2 abstehenden Pflanzenteilen erfolgt jedoch nur ein verlangsamter oder kein Einzug solcher Pflanzenteile durch die Pflanzenführungseinheit 7. Hier besteht erhebliche Gefahr, dass sich Pflanzenteile vor der Pflanzenführungseinheit 7 aufgrund der "querstehenden" Pflanzenteile aufstauen und entlang den Wuchshilfen 2 mit der Vorrichtung 1 in Fahrtrichtung des Traktors verschoben werden, um dann gegebenenfalls wie eingangs beschrieben als Knäuel oder Ballen eingezogen zu werden, wodurch eine erhebliche Gefahr eines Verrutschens der Wuchshilfen 2 in den Einzugsbereich der Ablöseelemente der Ablöseeinheit 4 besteht.

Die Vorrichtung 1 umfasst daher eine Pflanzenausrichteinheit 12. Die Pflanzenausrichteinheit 12 umfasst ein als Förderschnecke ausgebildetes Pflanzentransportmittel 13. Das Pflanzentransportmittel 13 stellt somit ein lineares Fördermittel dar. Die Pflanzenausrichteinheit 12 umfasst weiterhin eine Halterung, in der das Pflanzentransportmittel 13 drehbar gelagert ist sowie einen dritten Motor 14 zum Drehen der Förderschnecke des Pflanzentransportmittels der Pflanzenausrichteinheit 12 um die Achse der Förderschnecke.

Die Pflanzenausrichteinheit 12 ist vor der Pflanzenführungseinheit 7 angeordnet, hinsichtlich der Relativbewegung der Wuchshilfeführung zu der Vorrichtung. An den Wuchshilfen 2 anhaftende Pflanzenteile gelangen somit zuerst in den Wirkungsbereich der Pflanzenausrichteinheit 12 und danach in den Wirkungsbereich der Pflanzenführungseinheit 7.

Seitlich von den Wuchshilfen 2 abstehende Pflanzenteile können somit von dem Pflanzentransportmittel 13 erfasst und bewegt werden.

Die Drehrichtung ist dabei derart gewählt, dass die von dem Pflanzentransportmittel 13 erfassten. Pflanzenteile in Figur 3 nach oben bewegt werden.

Die lineare Bewegung solcher Pflanzenteile mittels des Pflanzentransportmittels 13 bewirkt typischerweise ein Drehen dieses Pflanzenteils um die Längsachse der Wuchshilfen 2, d. h. eine Drehung gegen den Uhrzeigersinn in der Ansicht gemäß Figur 3. Beispielhaft ist in Figur 3 als gepunktete Linie ein Pflanzenteil F schematisch dargestellt, welcher in etwa senkrecht zu den Wuchshilfen 2 und waagrecht gemäß der Darstellung in Figur 3 absteht. Der Pflanzenteil F wird von dem Pflanzentransportmittel 13 erfasst und mit seinem in Figur 3 rechten Ende nach oben bewegt, so dass das Pflanzenteil F eine Drehung um die Wuchshilfen 2 gegen den Uhrzeigersinn in der Darstellung gemäß Figur 3 ausführt.

Ausgehend von einer waagrechten Position des Pflanzenteils F wird dieser somit mittels des Pflanzentransportmittels 13 in Richtung einer senkrechten Position gemäß Darstellung in Figur 3 bewegt, d. h. in Richtung der bevorzugten Einzugsorientierung der Pflanzenführungseinheit 7.

Aufgrund der Relativbewegung der Wuchshilfe 2 zu der Vorrichtung 1 und des Anhaftens des Pflanzenteils F an der Wuchshilfe 2 wird das Pflanzenteil F weiterhin der Pflanzenführungseinheit 7 angenähert, trifft auf diese jedoch in senkrecht oder nahezu senkrechter Ausrichtung gemäß der Darstellung in Figur 3 auf und kann somit problemlos mit der Pflanzenführungseinheit 7 eingezogen werden.

Das als Förderschnecke ausgebildete Pflanzentransportmittel 13 weist in axialer Erstreckung eine Länge von etwa 60 cm auf mit einer Schneckensteigung von etwa 12,5 cm und einem Durchmesser von etwa 12,5 cm.

Wesentlich ist, dass die Förderschnecke in Endbereichen (Bezugszeichen G und H in Figur 1a) konisch zulaufend ausgebildet ist (in den Figuren nicht dargestellt).

In den genannten Bereichen G und H verringert sich der Durchmesser der Schnecke kontinuierlich zu dem jeweiligen Ende der Achse der Schnecke hin.

Ohne eine solche Ausgestaltung besteht ein höheres Risiko, dass an den Endbereichen des als Förderschnecke ausgebildeten Transportmittels des Pflanzentransportmittels 13 sich Pflanzenteile um die Förderschnecke herumwickeln.

Durch die konische Ausgestaltung wird ein solcher Fehler nahezu ausgeschlossen.

Der Teil der als Förderschnecke ausgebildeten Pflanzentransportmittel 13 wird mittels des dritten Motors 14 mit einer Umdrehungsgeschwindigkeit von etwa 220 U/min betrieben.

Mit der erfindungsgemäßen Vorrichtung und dem erfindungsgemäßen Verfahren wird somit ein wesentliches Fehlerpotential beim maschinellen Entfernen von Pflanzenteilen von mindestens einer Wuchshilfe beseitigt, indem mittels der Pflanzenausrichteinheit von der Wuchshilfe abstehende Pflanzenteile in Richtung einer bevorzugten Einzugsorientierung der Pflanzenführungseinheit bewegt werden.

Die Pflanzenführungseinheit 7 ist aufgrund der Ausgestaltung mit dem unteren Einzugsrad 7a und dem oberen Einzugsrad 7b, welche parallele Drehachsen aufweisen, insbesondere zum Einzug von Pflanzenteilen, welche sich in etwa entlang der Wuchshilfen 2 erstrecken sowie von Pflanzenteilen, welche in der Vorderansicht gemäß Figur 3 in etwa senkrecht stehen, d. h. Pflanzenteile, deren Längserstreckung zumindest in Projektion auf eine Ebene senkrecht zu den Wuchshilfen 2 in etwa senkrecht zu der Drehachse des unteren Einzugsrades 7a und damit auch senkrecht zur Drehachse des oberen Einzugsrades 7b steht.

Bei von den Wuchshilfen 2 abstehenden Pflanzenteilen, die zumindest in Projektion auf eine senkrecht zu den Wuchshilfen 2 stehende Ebene eine in der Darstellung in Figur 3 waagrechte Komponente aufweisen, insbesondere bei senkrecht und in der Ansicht in Figur 3 waagrecht von den Wuchshilfen 2 abstehenden Pflanzenteilen erfolgt jedoch nur ein verlangsamter oder kein Einzug solcher Pflanzenteile durch die Pflanzenführungseinheit 7. Hier besteht erhebliche Gefahr, dass sich Pflanzenteile vor der Pflanzenführungseinheit 7 aufgrund der "querstehenden" Pflanzenteile aufstauen und entlang den Wuchshilfen 2 mit der Vorrichtung 1 in Fahrtrichtung des Traktors verschoben werden, um dann gegebenenfalls, wie eingangs beschrieben, als Knäuel oder Ballen eingezogen zu werden, wodurch eine erhebliche Gefahr eines Verrutschens der Wuchshilfen 2 in den Einzugsbereich der Ablöseelemente der Ablöseeinheit 4 besteht.

Die Vorrichtung 1 umfasst daher eine Pflanzenausrichteinheit 12. Die Pflanzenausrichteinheit 12 umfasst ein als Förderschnecke ausgebildetes Pflanzentransportmittel 13. Das Pflanzentransportmittel 13 stellt somit ein lineares Fördermittel dar. Die Pflanzenausrichteinheit 12 umfasst weiterhin eine Halterung, in der das Pflanzentransportmittel 13 drehbar gelagert ist sowie einen dritten Motor 14 zum Drehen der Förderschnecke des Pflanzentransportmittels der Pflanzenausrichteinheit 12 um die Achse der Förderschnecke.

Die Pflanzenausrichteinheit 12 ist vor der Pflanzenführungseinheit 7 angeordnet, hinsichtlich der Relativbewegung der Wuchshilfeführung zu der Vorrichtung. An den Wuchshilfen 2 anhaftende Pflanzenteile gelangen somit zuerst in den Wirkungsbereich der Pflanzenausrichteinheit 12 und danach in den Wirkungsbereich der Pflanzenführungseinheit 7.

Seitlich von den Wuchshilfen 2 abstehende Pflanzenteile können somit von dem Pflanzentransportmittel 13 erfasst und bewegt werden.

Die Drehrichtung ist dabei derart gewählt, dass die von dem Pflanzentransportmittel 13 erfassten Pflanzenteile in Figur 3 nach oben bewegt werden.

Die lineare Bewegung solcher Pflanzenteile mittels des Pflanzentransportmittels 13 bewirkt typischerweise ein Drehen dieses Pflanzenteils um die Längsachse der Wuchshilfen 2, d. h. eine Drehung gegen den Uhrzeigersinn in der Ansicht gemäß Figur 3. Beispielhaft ist in Figur 3 als gepunktete Linie ein Pflanzenteil F schematisch dargestellt, welcher in etwa senkrecht zu den Wuchshilfen 2 und waagrecht gemäß der Darstellung in Figur 3 absteht. Der Pflanzenteil F wird von dem Pflanzentransportmittel 13 erfasst und mit seinem in Figur 3 rechten Ende nach oben bewegt, so dass das Pflanzenteil F eine Drehung um die Wuchshilfen 2 gegen den Uhrzeigersinn in der Darstellung gemäß Figur 3 ausführt.

Ausgehend von einer waagrechten Position des Pflanzenteils F wird dieser somit mittels des Pflanzentransportmittels 13 in Richtung einer senkrechten Position gemäß Darstellung in Figur 3 bewegt, d. h. in Richtung der bevorzugten Einzugsorientierung der Pflanzenführungseinheit 7.

Aufgrund der Relativbewegung der Wuchshilfe 2 zu der Vorrichtung 1 und des Anhaftens des Pflanzenteils F an der Wuchshilfe 2 wird das Pflanzenteil F weiterhin der Pflanzenführungseinheit 7 angenähert, trifft auf diese jedoch in senkrecht oder nahezu senkrechter Ausrichtung gemäß der Darstellung in Figur 3 auf und kann somit problemlos mit der Pflanzenführungseinheit 7 eingezogen werden.

Das als Förderschnecke ausgebildete Pflanzentransportmittel 13 weist in axialer Erstreckung eine Länge von etwa 60 cm auf mit einer Schneckensteigung von etwa 12,5 cm und einem Durchmesser von etwa 12,5 cm.

Wesentlich ist, dass die Förderschnecke in Endbereichen (Bezugszeichen G und H in Figur 1 a) konisch zulaufend ausgebildet ist (in den Figuren nicht dargestellt).

In den genannten Bereichen G und H verringert sich der Durchmesser der Schnecke kontinuierlich zu dem jeweiligen Ende der Achse der Schnecke hin.

Ohne eine solche Ausgestaltung besteht ein höheres Risiko, dass an den Endbereichen des als Förderschnecke ausgebildeten Transportmittels des Pflanzentransportmittels 13 sich Pflanzenteile um die Förderschnecke herumwickeln. Durch die konische Ausgestaltung wird ein solcher Fehler nahezu ausgeschlossen.

Der Teil der als Förderschnecke ausgebildeten Pflanzentransportmittel 13 wird mittels des dritten Motors 14 mit einer Umdrehungsgeschwindigkeit von etwa 220 U/min betrieben.

Mit der erfindungsgemäßen Vorrichtung und dem erfindungsgemäßen Verfahren wird somit ein wesentliches Fehlerpotential beim maschinellen Entfernen von Pflanzenteilen von mindestens einer Wuchshilfe beseitigt, indem mittels der Pflanzenausrichteinheit von der Wuchshilfe abstehende Pflanzenteile in Richtung einer bevorzugten Einzugsorientierung der Pflanzenführungseinheit bewegt werden.

## Patentansprüche

1. Vorrichtung (1) zum Entfernen von Pflanzenteilen von mindestens einer länglichen, zugstabilen, biegeschlaffen Wuchshilfe (2) während einer Bewegung der Vorrichtung (1) entlang der Wuchshilfe (2), insbesondere zum Entfernen von Rebentrieben von mindestens einem Spalierdraht,
umfassend
- eine Wuchshilfeführung (3), zum Führen der Wuchshilfe (2) während der Bewegung der Vorrichtung (1) entlang der Wuchshilfe (2),
- eine Ablöseeinheit (4) und
- eine Pflanzenführungseinheit (7) zum Komprimieren und/oder Zuführen der der an der Wuchshilfe (2) anhaftenden Pflanzenteile zu der Ablöseeinheit (4),
welche Ablöseeinheit (4) mindestens ein Ablöseelement umfasst, welches Ablöseelement derart beweglich an der Vorrichtung (1) angeordnet ist, dass bei Betrieb durch Bewegung des Ablöseelementes Pflanzenteile von der Wuchshilfe (2) zumindest teilweise ablösbar sind und
welche Pflanzenführungseinheit (7) mindestens ein drehbar angeordnetes Einzugsrad umfasst, zum Einzug und/oder Komprimieren der Pflanzenteile,
**dadurch gekennzeichnet,**
**dass** die Pflanzenführungseinheit (7) eine Mehrzahl von Einzugselementen (22a, 22b, 22c) umfasst,
wobei jedes der Mehrzahl von Einzugselementen (22a, 22b, 22c) beweglich und eine reale oder gedachte Mantelfläche des Einzugsrades durchdringend angeordnet ist, derart, dass bei einer Drehung des Einzugsrades das Einzugselement in einer Stellung nach vorne hinsichtlich der Bewegungsrichtung der Vorrichtung (1) weiter aus der Mantelfläche herausragt als in einer Stellung nach hinten.

2. Vorrichtung (1) nach Anspruch 1,
**dadurch gekennzeichnet,**
**dass** jedes der Mehrzahl von Einzugselementen (22a, 22b, 22c) drehbar mit einer Drehachse senkrecht zu einer Längserstreckung des Einzugselementes angeordnet ist, vorzugsweise,
**dass** alle Einzugselemente um eine gemeinsame Drehachse drehbar angeordnet sind, weiter bevorzugt,
**dass** die Mehrzahl von Einzugselementen (22a, 22b, 22c) in Axialrichtung ihrer gemeinsamen Drehachse versetzt, vorzugsweise nebeneinander angeordnet sind.

3. Vorrichtung (1) nach Anspruch 2,
**dadurch gekennzeichnet,**
**dass** die Drehachse jedes der Mehrzahl von Einzugselementen (22a, 22b, 22c) parallel zu der Drehachse des Einzugsrades ist, vorzugsweise, dass die Drehachse jedes der Mehrzahl von Einzugselementen (22a, 22b, 22c) in Bewegungsrichtung der Vorrichtung (1) zumindest nach vorne von der Drehachse des Einzugsrades beabstandet angeordnet ist und/oder
**dass** die Drehachse jedes der Mehrzahl von Einzugselementen (22a, 22b, 22c) zumindest in einer von einem Komprimierungsbereich des Einzugsrades abgewandten Richtung von der Drehachse des Einzugsrades beabstandet angeordnet ist.

4. Vorrichtung (1) nach einem der vorangegangenen Ansprüche,
**dadurch gekennzeichnet,**
**dass** die Einzugselemente in Axialrichtung ihrer Drehachse in Gruppen angeordnet sind, vorzugsweise paarweise.

5. Vorrichtung (1) nach Anspruch 4,
**dadurch gekennzeichnet,**
**dass** die Gruppen in Axialrichtung unterschiedliche Abstände zwischen den Einzugselementen (22a, 22b, 22c) aufweisen,
vorzugsweise, dass in Drehrichtung des Einzugsrades die Gruppen einen zunehmenden Abstand der Einzugselemente in Axialrichtung aufweisen.

6. Vorrichtung (1) nach einem der vorangegangenen Ansprüche,
**dadurch gekennzeichnet,**
**dass** die Pflanzenführungseinheit (7) ein Gegenelement zu dem Einzugsrad aufweist, welches angeordnet ist, um zwischen Einzugsrad und Gegenelement einen Komprimierungsbereich für die Pflanzenteile auszubilden, vorzugsweise,
**dass** das Gegenelement als Gegeneinzugsrad ausgebildet ist.

7. Vorrichtung (1) nach Anspruch 6,
**dadurch gekennzeichnet,**
**dass** die Einzugselemente im Komprimierungsbereich ein Abstand im Bereich 1 cm bis 20 cm, bevorzugt im Bereich 1 cm bis 10 cm, weiter bevorzugt im Bereich 1 cm bis 5 cm zu dem Gegenelement aufweisen.

8. Vorrichtung (1) nach Anspruch 5 und einem der Ansprüche 6 bis 7,
**dadurch gekennzeichnet,**
**dass** das Gegenelement als Gegeneinzugsrad ausgebildet ist, mit einem in Axialrichtung nach außen hin abnehmenden Radius und die in Axialrichtung weiter beabstandeten Einzugselemente eine größer Länge aufweisen als die weniger weit beabstandeten Einzugselemente.

9. Vorrichtung (1) nach einem der vorangegangenen Ansprüche,
**dadurch gekennzeichnet,**
**dass** die Mehrzahl von Einzugselementen (22a, 22b, 22c) am entgegen der Bewegungsrichtung der Vorrichtung (1) liegenden Ende des Komprimierungsbereiches um weniger als 5 cm, bevorzugt um weniger als 3 cm, weiter bevorzugt nicht aus der Mantelfläche (20) des Einzugsrades herausragen.

10. Vorrichtung (1) nach einem der vorangegangenen Ansprüche,
**dadurch gekennzeichnet,**
**dass** das Einzugsrad eine in Axialrichtung etwa mittige Führung für eine Wuchshilfe (2) aufweist, vorzugsweise,
**dass** das Einzugsrad mit einem in etwa wannenförmigen Querschnitt parallel zur Drehachse ausgebildet ist, bevorzugt in Axialrichtung einen nach außen zunehmenden Radius aufweist.

11. Vorrichtung (1) nach einem der vorangegangenen Ansprüche,
**dadurch gekennzeichnet,**
**dass** das Einzugsrad eine Mantelfläche (20) mit Ausnehmungen (21', 21", 21'") und/oder Führungen für die Einzugselemente aufweist.

12. Vorrichtung (1) nach einem der vorangegangenen Ansprüche,
**dadurch gekennzeichnet,**
**dass** jedes der Mehrzahl von Einzugselementen (22a, 22b, 22c) lösbar an einer Drehachse angeordnet ist, vorzugsweise lösbar und drehbar an einer Drehachse angeordnet ist.

13. Vorrichtung (1) nach Anspruch 12,
**dadurch gekennzeichnet,**
**dass** um die Drehachse eine oder mehrere in Axialrichtung wahlweise verschiebbare Hülsen angeordnet sind,
**dass** jedes der Mehrzahl von Einzugselementen (22a, 22b, 22c) zumindest eine Hülse teilweise umgreift, vorzugsweise dass an jedem der Mehrzahl von Einzugselementen (22a, 22b, 22c) ein C-Profil zum Umgreifen der Hülse ausgebildet ist.

14. Vorrichtung (1) nach einem der vorangegangenen Ansprüche,
**dadurch gekennzeichnet,**
**dass** jedes der Mehrzahl von Einzugselementen (22a, 22b, 22c) an der in Drehrichtung weisenden Seite abgerundete Kanten aufweist, vorzugsweise, dass jedes der Mehrzahl von Einzugselementen (22a, 22b, 22c) senkrecht zur Längserstreckung einen in etwa rechteckigen Querschnitt mit an der in Drehrichtung weisenden Seite abgerundeten Kanten aufweist.

15. Vorrichtung (1) nach einem der vorangegangenen Ansprüche,
**dadurch gekennzeichnet,**
**dass** jedes der Mehrzahl von Einzugselementen (22a, 22b, 22c) an dem aus der Mantelfläche (20) herausragenden Ende einen Freiwinkel aufweist, vorzugsweise einen Freiwinkel im Bereich 2° bis 30°, weiter bevorzugt im Bereich 5° bis 15°, insbesondere etwa 10°.

## Claims

1. Device (1) for removing plant parts from at least one elongate, tensile-resistant, flexible growth support (2) during movement of the device (1) along the growth support (2), especially for removing vine shoots from at least one trellis wire,
comprising
- a growth support guide means (3), for guiding the growth support (2) during the movement of the device (1) along the growth support (2),
- a stripping unit (4) and
- a plant guide unit (7) for compressing and/or supplying the plant parts adhering to the growth support (2) to the stripping unit (4),
which stripping unit (4) comprises at least one stripping element, which stripping element is arranged on the device (1) so as to be movable in such a way that, during operation, plant parts are at least partly strippable from the growth support (2) by movement of the stripping element, and
which plant guide unit (7) comprises at least one rotatably arranged intake wheel, for intake and/or compression of the plant parts, **characterised in that**
the plant guide unit (7) comprises a plurality of intake elements (22a, 22b, 22c),
each of the plurality of intake elements (22a, 22b, 22c) being movable and arranged so as to pass through a real or notional outer surface of the intake wheel in such a way that, on rotation of the intake wheel, in a forward position relative to the direction of movement of the device (1) the intake element protrudes from the outer surface to a greater extent than in a rearward position.

2. Device (1) according to claim 1,
**characterised in that**
each of the plurality of intake elements (22a, 22b, 22c) is arranged so as to be rotatable with a shaft perpendicular to a longitudinal extent of the intake element,
preferably all the intake elements are arranged so as to be rotatable about a common shaft,
more especially the plurality of intake elements (22a, 22b, 22c) are arranged staggered in the axial direction of their common shaft, preferably one next to the other.

3. Device (1) according to claim 2,
**characterised in that**
the shaft of each of the plurality of intake elements (22a, 22b, 22c) is parallel to the shaft of the intake wheel,
preferably the shaft of each of the plurality of intake elements (22a, 22b, 22c) is arranged spaced apart from the shaft of the intake wheel at least towards the front in the direction of movement of the device (1), and/or
the shaft of each of the plurality of intake elements (22a, 22b, 22c) is arranged spaced apart from the shaft of the intake wheel at least in a direction facing away from a compression region of the intake wheel.

4. Device (1) according to any one of the preceding claims,
**characterised in that**
the intake elements are arranged in groups in the axial direction of their shaft, preferably in pairs.

5. Device (1) according to claim 4,
**characterised in that**
the groups have different distances between the intake elements (22a, 22b, 22c) in the axial direction,
preferably, in the direction of rotation of the intake wheel, the groups have increasing distances between the intake elements in the axial direction.

6. Device (1) according to any one of the preceding claims,
**characterised in that**
the plant guide unit (7) has a counter-element to the intake wheel, which counter-element is arranged to form a compression region for the plant parts between intake wheel and counter-element, preferably the counter-element is in the form of a counter-intake wheel.

7. Device (1) according to claim 6,
**characterised in that**
in the compression region the spacing of the intake elements from the counter-element is in the range of from 1 cm to 20 cm, preferably in the range of from 1 cm to 10 cm, more especially in the range of from 1 cm to 5 cm.

8. Device (1) according to claim 5 and either one of claims 6 and 7,
**characterised in that**
the counter-element is in the form of a counter-intake wheel the radius of which decreases towards the outside in the axial direction, and the intake elements that are spaced further apart in the axial direction are longer than the intake elements spaced less far apart.

9. Device (1) according to any one of the preceding claims,
**characterised in that**
the plurality of intake elements (22a, 22b, 22c) at that end of the compression region which is located opposite to the direction of movement of the device (1) protrude from the outer surface (20) of the intake wheel by less than 5 cm, especially by less than 3 cm, but preferably do not protrude therefrom.

10. Device (1) according to any one of preceding claims,
**characterised in that**
the intake wheel has a guide means for a growth support (2), which guide means is approximately central in the axial direction, preferably the intake wheel has an approximately trough-shaped cross-section parallel to the shaft, preferably having a radius that increases towards the outside in the axial direction.

11. Device (1) according to any one of the preceding claims,
**characterised in that**
the intake wheel has an outer surface (20) having openings (21', 21", 21'") and/or guide means for the intake elements.

12. Device (1) according to any one of the preceding claims,
**characterised in that**
each of the plurality of intake elements (22a, 22b, 22c) is detachably arranged on a shaft, preferably detachably and rotatably arranged on a shaft.

13. Device (1) according to claim 12,
**characterised in that**
one or more sleeves, which are displaceable as desired in the axial direction, are arranged around the shaft,
each of the plurality of intake elements (22a, 22b, 22c) engages around at least part of a sleeve, a C-profile for engagement around the sleeve preferably being formed on each of the plurality of intake elements (22a, 22b, 22c).

14. Device (1) according to any one of the preceding claims,
**characterised in that**
each of the plurality of intake elements (22a, 22b, 22c) has rounded edges on its side that faces in the direction of rotation, preferably each of the plurality of intake elements (22a, 22b, 22c) has, perpendicular to its longitudinal extent, an approximately rectangular cross-section the edges of which are rounded on the side that faces in the direction of rotation.

15. Device (1) according to any one of the preceding claims,
**characterised in that**
each of the plurality of intake elements (22a, 22b, 22c) has a clearance angle at the end protruding from the outer surface (20), preferably a clearance angle in the range of from 2° to 30°, more especially in the range of from 5° to 15°, especially about 10°.

## Revendications

1. Dispositif (1) pour supprimer des éléments de plantes d'au moins une aide à la croissance (2) oblongue, stable en traction et molle en flexion, pendant un déplacement du dispositif (1) le long de l'aide à la croissance (2), en particulier pour supprimer des rejets de vigne d'au moins un fil métallique d'espalier,
comprenant
- un guide (3) d'aide à la croissance, pour guider l'aide à la croissance (2) pendant le déplacement du dispositif (1) le long de l'aide à la croissance (2),
- une unité de détachement (4) et
- une unité (7) de guidage de plantes pour comprimer et/ou apporter à l'unité de détachement (4) les éléments de plantes adhérant à l'aide à la croissance (2),
ladite unité de détachement (4) comprenant au moins un élément de détachement qui est disposé à déplacement sur le dispositif (1) de telle sorte qu'en service, par le déplacement de l'élément de détachement, des éléments de plantes peuvent être au moins partiellement détachés de l'aide à la croissance (2),
et ladite unité (7) de guidage de plantes comprenant au moins une roue d'engagement disposée à rotation, pour engager et/ou comprimer les éléments de plantes,
**caractérisé en ce que** l'unité (7) de guidage de plantes comprend une pluralité d'éléments d'engagement (22a, 22b, 22c),
sachant que chaque élément de la pluralité d'éléments d'engagement (22a, 22b, 22c) est disposé à déplacement et en traversant une surface périphérique réelle ou imaginaire de la roue d'engagement, de telle sorte que, lors d'une rotation de la roue d'engagement, l'élément d'engagement dépasse plus de la surface périphérique dans une position vers l'avant, par rapport à la direction de déplacement du dispositif (1), que dans une position vers l'arrière.

2. Dispositif (1) selon la revendication 1, **caractérisé en ce que** chaque élément de la pluralité d'éléments d'engagement (22a, 22b, 22c) est disposé à rotation avec un axe de rotation perpendiculaire à une étendue longitudinale de l'élément d'engagement,
**en ce que**, de préférence, tous les éléments d'engagement sont disposés à rotation autour d'un axe de rotation commun,
**en ce que**, d'une manière encore plus préférée, les éléments de la pluralité d'éléments d'engagement (22a, 22b, 22c) sont décalés dans la direction axiale de leur axe de rotation commun, de préférence sont disposés les uns à côté des autres.

3. Dispositif (1) selon la revendication 2, **caractérisé en ce que** l'axe de rotation de chaque élément de la pluralité d'éléments d'engagement (22a, 22b, 22c) est parallèle à l'axe de rotation de la roue d'engagement,
**en ce que**, de préférence, l'axe de rotation de chaque élément de la pluralité d'éléments d'engagement (22a, 22b, 22c) est disposé à distance de l'axe de rotation de la roue d'engagement au moins vers l'avant dans la direction de déplacement du dispositif (1), et/ou **en ce que** l'axe de rotation de chaque élément de la pluralité d'éléments d'engagement (22a, 22b, 22c) est disposé à distance de l'axe de rotation de la roue d'engagement au moins dans une direction éloignée d'une zone de compression de la roue d'engagement.

4. Dispositif (1) selon l'une des revendications précédentes, **caractérisé en ce que** les éléments d'engagement sont disposés par groupes dans la direction axiale de leur axe de rotation, de préférence par paires.

5. Dispositif (1) selon la revendication 4, **caractérisé en ce que** les groupes présentent des distances différentes en direction axiale entre les éléments d'engagement (22a, 22b, 22c),
**en ce que**, de préférence, dans la direction de rotation de la roue d'engagement, les groupes présentent une distance croissante entre les éléments d'engagement en direction axiale.

6. Dispositif (1) selon l'une des revendications précédentes, **caractérisé en ce que** l'unité (7) de guidage de plantes présente un pendant à la roue d'engagement, qui est disposé afin de former entre la roue d'engagement et le pendant une zone de compression pour les éléments de plantes,
**en ce que**, de préférence, le pendant est réalisé sous forme de roue d'engagement antagoniste.

7. Dispositif (1) selon la revendication 6, **caractérisé en ce que** les éléments d'engagement présentent, dans la zone de compression, une distance par rapport au pendant dans la plage de 1 cm à 20 cm, de préférence dans la plage de 1 cm à 10 cm, d'une manière encore plus préférée dans la plage de 1 cm à 5 cm.

8. Dispositif (1) selon la revendication 5 et selon l'une des revendications 6 à 7, **caractérisé en ce que** le pendant est réalisé sous forme de roue d'engagement antagoniste avec un rayon diminuant vers l'extérieur en direction axiale, et les éléments d'engagement plus distants en direction axiale présentent une plus grande longueur que les éléments d'engagement moins distants.

9. Dispositif (1) selon l'une des revendications précédentes, **caractérisé en ce que** les éléments de la pluralité d'éléments d'engagement (22a, 22b, 22c), à l'extrémité de la zone de compression située à l'opposé de la direction de déplacement du dispositif (1), dépassent de la surface périphérique (20) de la roue d'engagement de moins de 5 cm, de préférence de moins de 3 cm, d'une manière encore plus préférée n'en dépassent pas.

10. Dispositif (1) selon l'une des revendications précédentes, **caractérisé en ce que** la roue d'engagement présente un guide approximativement central en direction axiale pour une aide à la croissance (2),
**en ce que**, de préférence, la roue d'engagement est réalisée avec une section approximativement en forme de cuvette parallèlement à l'axe de rotation, de préférence présente en direction axiale un rayon augmentant vers l'extérieur.

11. Dispositif (1) selon l'une des revendications précédentes, **caractérisé en ce que** la roue d'engagement présente une surface périphérique (20) avec des évidements (21', 21", 21"') et/ou des guides pour les éléments d'engagement.

12. Dispositif (1) selon l'une des revendications précédentes, **caractérisé en ce que** chaque élément de la pluralité d'éléments d'engagement (22a, 22b, 22c) est disposé de manière amovible sur un axe de rotation, de préférence est disposé de manière amovible et rotative sur un axe de rotation.

13. Dispositif (1) selon la revendication 12, **caractérisé en ce qu'**une ou plusieurs douilles sélectivement coulissantes en direction axiale sont disposées autour de l'axe de rotation,
**en ce que** chaque élément de la pluralité d'éléments d'engagement (22a, 22b, 22c) s'engage partiellement autour d'au moins une douille, de préférence **en ce qu'**un profil en C est formé sur chaque élément de la pluralité d'éléments d'engagement (22a, 22b, 22c) pour s'engager autour de la douille.

14. Dispositif (1) selon l'une des revendications précédentes, **caractérisé en ce que** chaque élément de la pluralité d'éléments d'engagement (22a, 22b, 22c) présente des bords arrondis sur le côté dirigé dans la direction de rotation,
**en ce que**, de préférence, chaque élément de la pluralité d'éléments d'engagement (22a, 22b, 22c) présente perpendiculairement à l'étendue longitudinale une section approximativement rectangulaire avec des bords arrondis sur le côté dirigé dans la direction de rotation.

15. Dispositif (1) selon l'une des revendications précédentes, **caractérisé en ce que** chaque élément de la pluralité d'éléments d'engagement (22a, 22b, 22c) présente un angle de dépouille à l'extrémité dépassant de la surface périphérique (20), de préférence un angle de dépouille dans la plage de 2° à 30°, d'une manière encore plus préférée dans la plage de 5° à 15°, en particulier d'environ 10°.
